# EUROPÄISCHE PATENTSCHRIFT

(11) **EP 3 932 019 B1**
(45) Veröffentlichungstag und Bekanntmachung des Hinweises auf die Patenterteilung: **03.08.2022**
(21) Anmeldenummer: 20712914.9
(22) Anmeldetag: 18.03.2020
(51) Int. Cl.: H04L 12/403, H04L 12/46, H04L 12/40

(54) **AUTOMATISIERUNGSNETZWERK, NETZWERKVERTEILER UND VERFAHREN ZUR DATENÜBERTRAGUNG**
AUTOMATION NETWORK, NETWORK DISTRIBUTER AND METHOD FOR DATA TRANSMISSION
SYSTÈME D'AUTOMATISATION, RÉPARTITEUR DE RÉSEAU ET PROCÉDÉ DE TRANSMISSION DE DONNÉES

(30) Priorität: 28.05.2019 DE 102019114307
(43) Veröffentlichungstag der Anmeldung: 05.01.2022
(73) Patentinhaber: Beckhoff Automation GmbH, 33415 Verl (DE)
(72) Erfinder: JANSSEN, Dirk, 33415 Verl (DE); ESSLER, Florian, 90427 Nürnberg (DE); BECKMANN, Guido, 33415 Verl (DE); BECKHOFF, Hans, 33415 Verl (DE); ROSTAN, Martin, 90482 Nürnberg (DE); RETTIG, Thomas, 33378 Rheda-Wiedenbrück (DE); BÜTTNER, Holger, 12157 Berlin (DE)
(74) Vertreter: Patentanwaltskanzlei WILHELM & BECK
(86) Internationale Anmeldenummer: PCT/EP2020/057448
(87) Internationale Veröffentlichungsnummer: WO 2020/239286

(56) Entgegenhaltungen:
- US-A1- 2010 110 884
- US-A1- 2011 310 894
- US-B1- 9 374 285

## Beschreibung

Die Erfindung betrifft ein Automatisierungsnetzwerk, das mehrere Netzwerkteilnehmer umfasst. Die Erfindung betrifft weiterhin wenigstens einen Netzwerkteilnehmer in dem Automatisierungsnetzwerk, der als Netzwerkverteiler ausgebildet ist. Überdies betrifft die Erfindung ein Verfahren zur Datenübertragung in dem Automatisierungsnetzwerk, wobei der Netzwerkverteiler ausgebildet ist, das Verfahren zur Datenübertragung auszuführen. Diese Patentanmeldung beansprucht die Priorität der deutschen Patentanmeldung DE 10 2019 114 307.1, eingereicht am 28.05.2019 mit dem Titel AUTOMATISIERUNGSNETZWERK, NETZWERKVERTEILER UND VERFAHREN ZUR DATENÜBERTRAGUNG.

Automatisierungsnetzwerke werden häufig als "Feldbussysteme" betrieben. Dies sind industrielle Bussysteme, die eine echtzeitfähige Steuerung der Maschinen oder Anlagen des Automatisierungsnetzwerks ermöglichen, wobei die Maschinen oder Anlagen des Automatisierungsnetzwerks mithilfe von speicherprogrammierbaren Steuerungen (SPS) gesteuert werden. Zur Kommunikation der Feldgeräte, also beispielsweise Sensoren und Aktoren der Maschinen oder Anlagen des Automatisierungsnetzwerks mit der SPS, nutzt die SPS das Feldbussystem. Senden mehrere Netzwerkteilnehmer Telegramme über dieselbe Datenleitung in dem Automatisierungsnetzwerk, die als leitungsgebundenes oder drahtloses Bussystem ausgebildet sein kann, so muss es eine Möglichkeit geben, dass sich die Netzwerkteilnehmer dieselbe Datenleitung für die Datenübertragung teilen können. Zu diesem Zweck gibt es festgelegte Hierarchien und normierte Datenübertragungsprotokolle.

Meist arbeiten die Feldbussysteme im sogenannten "Master-Slave-Betrieb". Das heißt wenigstens ein Netzwerkteilnehmer ist als Masterteilnehmer ausgebildet und übernimmt die Steuerung der Prozesse, während die übrigen Netzwerkteilnehmer als Slaveteilnehmer die Abarbeitung von Teilaufgaben im Steuerungsbetrieb des Automatisierungsnetzwerks übernehmen. Der Austausch von Daten erfolgt dabei im Automatisierungsnetzwerk mithilfe von Telegrammen, die vom Masterteilnehmer an die Slaveteilnehmer ausgegeben werden. Die Slaveteilnehmer lesen die an sie adressierten Ausgangsdaten aus dem Telegramm und legen ihre Eingangsdaten in das Telegramm und senden das Telegramm an den Masterteilnehmer zurück.

In Automatisierungsnetzwerken, in denen der Datenverkehr mittels Telegrammen mit zugrundeliegendem EtherCAT Datenübertragungsprotokoll erfolgt, nachfolgend als EtherCAT Netzwerke bezeichnet, werden die Telegramme durch alle Slaveteilnehmer geroutet und im Falle einer an einer Datenleitung angeschlossenen Kette an Slaveteilnehmern von dem letzten Slaveteilnehmer an den Masterteilnehmer zurückgesendet. Dabei bezeichnet Routing das Festlegen von Übertragungswegen für die Übermittlung von Telegrammen im Automatisierungsnetzwerk. Nachteilig an einem solchen EtherCAT Netzwerk ist der Umstand, dass die Telegramme stets von allen Slaveteilnehmern durchlaufen und verarbeitet werden, das heißt jeder Slaveteilnehmer liest die an ihn adressierten Ausgangsdaten des Telegramms im Durchlauf ("on the fly") und legt seine Eingangsdaten in das Telegramm bevor der Slaveteilnehmer das Telegramm weitergeleitet. Hierbei entspricht das Senden eines Telegramms von einem Slaveteilnehmer in einem EtherCAT Netzwerk dem Eintragen von Informationen in das vom Masternetzwerkteilnehmer gesendete Telegramm und das Weiterleiten des Telegramms an einen in Telegrammlaufrichtung nachfolgenden Slaveteilnehmer, da ein Slaveteilnehmer in einem EtherCAT Netzwerk selbst keine Antworttelegramme auf Anfrage des Masterteilnehmers sendet.

Häufig werden in Automatisierungsnetzwerken Netzwerkverteiler, sogenannte "Switche" eingesetzt, um die einzelnen Datenleitungen mit den angeschlossenen Netzwerkteilnehmern miteinander zu verbinden und dafür Sorge zu tragen, dass die Daten bzw. Telegramme über die an den einzelnen Ein-/Ausgangs-Ports der Netzwerkverteiler über Datenleitungen angeschlossenen Netzwerkteilnehmer an ihr Ziel gelangen. Darüber hinaus können die Netzwerkverteiler auch als sogenannte "managebare Switche" ausgebildet sein, das heißt neben den grundlegenden Funktionen wie "Store-and-Forward", also dem vollständigen Empfang eines Telegramms, der Berechnung einer Prüfsumme für das Telegramm und ein anschließendes Routing des Telegramms, können sie zusätzlich noch über Steuer- und Überwachungsfunktionen verfügen. Jedoch eröffnet selbst der Einsatz eines managebaren Switchs in einem Automatisierungsnetzwerk keine zusätzliche Funktion der Verarbeitung eines Telegramms als Slaveteilnehmer. Auch ein managebarer Switch ist nicht als ein herkömmlicher Slaveteilnehmer ausgebildet, sondern dient dem Routing der Telegramme statt deren eigenständiger Verarbeitung. Demnach gibt es keinen Netzwerkverteiler, der neben der Routing-Funktionalität bzw. der zusätzlichen Steuer- und Überwachungsfunktionen, noch über die Funktion eines Slaveteilnehmers, also beispielsweise der Abarbeitung von Teilaufgaben im Steuerungsbetrieb des Automatisierungsnetzwerks verfügt.

Druckschrift US 9,374,285 B1 offenbart ein Netzwerk 100 mit Netzwerkverteilern SW1 bis SW9, die Ein-/Ausgangs-Ports 34 aufweisen und über Datenleitungen 66 miteinander verbunden sind. Das Netzwerk 100 weist zudem einen Controller 18 auf, der als Masterteilnehmer fungiert und mit den Netzwerkverteilern SW1 bis SW9 via network discovery packets kommuniziert. Die network discovery packets umfassen broadcast discovery packets und directed discovery packets, wobei insbesondere directed discovery packets von den Netzwerkverteilern SW1 bis SW9 verarbeitet werden, und als solche Datenpakete vom Controller 18 gekennzeichnet werden.

Die Druckschrift US 2010/0110884 A1 offenbart ein Netzwerk 1 mit Netzwerkteilnehmern 4 bis 13, die in einer Ringtopologie bzw. vermaschten Topologie angeordnet und miteinander über Datenleitungen verbunden sind. Die Netzwerkteilnehmer 4 bis 13 können einen Masterteilnehmer umfassen, der Datenpakete erzeugt und an die als Slaveteilnehmer ausgebildeten Netzwerkteilnehmer versendet. Darüber hinaus informiert die Druckschrift über ein Verfahren zum Rekonfigurieren des Netzwerks 1.

Es ist daher Aufgabe der vorliegenden Erfindung, einen verbesserten Netzwerkverteiler anzugeben, der eine optimierte Ressourcenausnutzung ermöglicht und den Durchsatz bei der Datenübertragung erhöht. Es ist weiterhin Aufgabe der Erfindung ein verbessertes Automatisierungsnetzwerk anzugeben.

Diese Aufgabe wird durch die Merkmale der unabhängigen Ansprüche gelöst. Weitere vorteilhafte Ausführungsformen der Erfindung sind in den abhängigen Ansprüchen angegeben.

Erfindungsgemäß werden ein Automatisierungsnetzwerk und ein Netzwerkteilnehmer, der als Netzwerkverteiler ausgebildet ist, vorgeschlagen. Das Automatisierungsnetzwerk weist Netzwerkteilnehmer auf, die über ein Datenleitungsnetz miteinander verbunden sind. Dabei ist wenigstens ein Netzwerkteilnehmer als Netzwerkverteiler ausgebildet, der eine Verarbeitungseinheit zum Verarbeiten und/oder Routen der Telegramme umfasst. Zudem ist wenigstens ein Netzwerkteilnehmer als Masterteilnehmer ausgebildet, der ausgelegt ist, Telegramme über das Datenleitungsnetz zu versenden. Der wenigstens eine Netzwerkverteiler ist ausgebildet, Telegramme zu routen. Der Netzwerkverteiler umfasst mehrere Ein-/Ausgangs-Ports und ist über einen ersten Ein-/Ausgangs-Port mit dem Masterteilnehmer über das Datenleitungsnetz verbunden. Mit dem Begriff verbunden soll hierbei ausgedrückt werden, dass zwischen dem Masterteilnehmer und dem Netzwerkverteiler weitere Netzwerkteilnehmer über das Datenleitungsnetz angeschlossen sein können. Der Masterteilnehmer ist ausgelegt, mit einem Telegrammelement in dem zu versendenden Telegramm anzuzeigen, dass das Telegramm für eine Verarbeitung durch die Netzwerkteilnehmer freigegeben ist. Die Verarbeitungseinheit des Netzwerkverteilers wiederum ist ausgebildet, ein über den ersten Ein-/Ausgangs-Port des Netzwerkverteilers empfangenes Telegramm zu verarbeiten, wenn das Telegrammelement des Telegramms eine Freigabe der Verarbeitung des Telegramms für die Netzwerkteilnehmer anzeigt. Die Verarbeitungseinheit des Netzwerkverteilers ist mit dem ersten Ein-/Ausgangs-Port des Netzwerkverteilers verbunden. Die Verarbeitungseinheit des Netzwerkverteilers ist ferner ausgelegt, wenn der Netzwerkverteiler über den ersten Ein-/Ausgangs-Port ein Telegramm von dem Masterteilnehmer empfängt, das mit einem Telegrammelement eine Freigabe der Verarbeitung des Telegramms für die Netzwerkteilnehmer anzeigt, das Telegramm nach der Verarbeitung durch den Netzwerkverteiler über einen fest zugeordneten weiteren Ein-/Ausgangs-Port des Netzwerkverteilers auszugeben, wenn an dem fest zugeordneten weiteren Ein-/Ausgangs-Port des Netzwerkverteilers weitere Netzwerkteilnehmer angeschlossen sind.

Mithilfe der vorliegenden Erfindung kann ein Netzwerkverteiler, ein "Switch" oder "Branch" als ein Gerät mit einer Doppelfunktionalität bereitgestellt werden. Der Netzwerkverteiler arbeitet einerseits als konfigurierbarer Netzwerkverteiler und bietet sämtliche Vorzüge eines Netzwerkverteilers: managebarer Switch mit Steuerfunktion, Store-and-Forward-Betriebsweise, Routing der Telegramme, etc. sowie der Möglichkeit zur Fragmentierung von Telegrammen und der fragmentierten Übertragung der Telegramme in dem Automatisierungsnetzwerk.

Überdies vereint der Netzwerkverteiler zusätzlich noch einen herkömmlichen Netzwerk- bzw. Slaveteilnehmer, der in der Lage ist, Telegramme von einem Masterteilnehmer zu verarbeiten, in einem Gerät. Der Masterteilnehmer kann dem Netzwerkverteiler mit Doppelfunktionalität mittels geeigneter Anzeige in den Telegrammen die Freigabe der Verarbeitung oder die Sperrung der Verarbeitung "sichtbar machen", sodass der Netzwerkverteiler abhängig von der Anzeige ein Telegramm verarbeitet und/oder routet. Der Netzwerkverteiler ist somit flexibel im Automatisierungsnetzwerk einsetzbar und kann aufgrund seiner Doppelfunktionalität zur Reduktion von Netzwerkkomponenten im Automatisierungsnetzwerk beitragen. Der Netzwerkverteiler ist außerdem kompatibel zu bestehenden Automatisierungsnetzwerken und kann ohne Aufwand in diese integriert werden.

Der fest zugeordnete weitere Ein-/Ausgangs-Port des Netzwerkverteilers ist der Ein-/Ausgangs-Port des Netzwerkverteilers über den die Verarbeitungseinheit nicht routen braucht. Denn aufgrund der Einstellung, also der Festlegung des weiteren Ein-/Ausgangs-Port des Netzwerkverteilers als den standardmäßigen Ein-/Ausgangs-Port, über den ein Telegramm nach der Verarbeitung durch die Verarbeitungseinheit ausgegeben wird, ist kein Abgleich von der Verarbeitungseinheit mit einer Routingtabelle, die für eine Zuordnung der Ein-/Ausgangs-Ports des Netzwerkverteilers zu den Telegrammen genutzt wird, erforderlich. Sind an dem fest zugeordneten weiteren Ein-/Ausgangs-Port keine weiteren Netzwerkteilnehmer über das Datenleitungsnetz angeschlossen, so kann der Netzwerkverteiler der letzte Netzwerkteilnehmer in einer Kette an Netzwerkteilnehmern sein, und das Telegramm von dem Masterteilnehmer über die Kette zurück an den Masterteilnehmer senden. In dem Fall kann der weitere Ein-/Ausgangs-Port des Netzwerkverteilers mithilfe einer Schalterfunktion kurzgeschlossen sein.

Gemäß einer weiteren Ausführungsform ist die Verarbeitungseinheit des Netzwerkverteilers ausgelegt, ein Telegramm für die Verarbeitung durch die Netzwerkteilnehmer freizugeben und die Freigabe der Verarbeitung mit dem Telegrammelement anzuzeigen, wenn ein Telegramm eine Freigabe der Verarbeitung des Telegramms durch die Netzwerkteilnehmer nicht anzeigt und der Netzwerkverteiler mittels Verarbeitungseinheit beim Routen des Telegramms feststellt, dass das Telegramm für Netzwerkteilnehmer bestimmt ist, die direkt über einen Ein-/Ausgangs-Port des Netzwerkverteilers angeschlossen sind. Der Netzwerkverteiler kann in vorteilhafter Weise dazu ausgelegt sein, Telegramme gezielt für die Verarbeitung freizugeben und durch die gezielte Freigabe der Telegramme die Vertraulichkeit bei der Datenübertragung in dem Automatisierungsnetzwerk erhöhen. Umgekehrt kann der Netzwerkverteiler ein Telegramm auch für die Verarbeitung sperren, wenn der Netzwerkverteiler ein für die Verarbeitung freigegebenes Telegramm von einem vorangehenden Netzwerkverteiler in dem Automatisierungsnetzwerk empfängt, das für keinen direkt über einen Ein-/Ausgangs-Port des Netzwerkverteilers angeschlossenen Netzwerkteilnehmer bestimmt ist. Auch auf diese Weise kann die Vertraulichkeit bei der Datenübertragung mithilfe des erfindungsgemäßen Netzwerkverteilers erhöht werden.

In einer weiteren Ausführungsform weisen die Telegramme eine Telegrammkennung auf. Die Verarbeitungseinheit des Netzwerkverteilers umfasst einen Protokollchip zur Verarbeitung der Telegramme und weist eine Routingeinheit auf, um auf der Grundlage der Telegrammkennung der Telegramme ein Routing der Telegramme über die Ein-/Ausgangs-Ports des Netzwerkverteilers durchzuführen. Mithilfe der Verwendung der Telegrammkennung, die in einem EtherCAT Netzwerk beispielsweise als Segmentadresse verwirklicht sein kann, ist ein einfaches Routing und eine ein-eindeutige Zuordnung der Telegrammkennung eines Telegramms zu einem Ein-/Ausgangs-Port des Netzwerkverteilers möglich. Mithilfe der Verarbeitungseinheit ist der Netzwerkverteiler nicht auf ein bestimmtes Datenübertragungsprotokoll beschränkt, da der Protokollchip beispielsweise zur Verarbeitung mehrerer Datenübertragungsprotokolle ausgelegt sein kann.

Gemäß einer weiteren Ausführungsform ist der Protokollchip der Verarbeitungseinheit des Netzwerkverteilers als EtherCAT Slave Controller ausgebildet. In einem EtherCAT Netzwerk ist der Protokollchip des Netzwerkverteilers vorzugsweise als EtherCAT Slave Controller ausgebildet, um die bewährte echtzeitfähige EtherCAT Technologie nutzen zu können und den Netzwerkverteiler in der Doppelfunktionalität als EtherCAT Slaveteilnehmer auszubilden.

In einer weiteren Ausführungsform ist die Routingeinheit der Verarbeitungseinheit des Netzwerkverteilers ausgelegt, die Telegrammkennung der Telegramme jeweils mit einer Routingtabelle zu vergleichen und die Telegramme über den der Telegrammkennung zugeordneten Ein-/Ausgangs-Port des Netzwerkverteilers auszugeben. Die Routingeinheit der Verarbeitungseinheit des Netzwerkverteilers ist ausgebildet, ein Telegramm für eine Verarbeitung durch die Netzwerkteilnehmer freizugeben und die Freigabe für die Netzwerkteilnehmer in dem Telegramm mit dem Telegrammelement anzuzeigen. Die für das Routing relevanten Einträge in der Routingtabelle beschränken sich in vorteilhafter Weise auf die Zuordnung der Telegrammkennung zu einem Ein-/Ausgangs-Port des Netzwerkverteilers. Somit kann aufgrund der effizienten Informationsnutzung in der Routingtabelle Speicherplatz eingespart werden. Dies kann in vorteilhafter Weise zur Senkung der Kosten beitragen.

Gemäß einer weiteren Ausführungsform ist das Telegrammelement als ein Datenelement mit einem ersten oder zweiten Wert ausgebildet. Der erste Wert zeigt an, dass ein Telegramm für die Verarbeitung durch die Netzwerkteilnehmer freigegeben ist, und der zweite Wert zeigt an, dass ein Telegramm für die Verarbeitung durch die Netzwerkteilnehmer gesperrt ist. Vorzugsweise ist das Telegrammelement eines Telegramms in dem Kopfabschnitt des Telegramms angeordnet, sodass die Netzwerkteilnehmer frühzeitig eine Freigabe des Telegramms für die Verarbeitung oder eine Sperrung des Telegramms für die Verarbeitung erkennen können und ohne Verzögerung mit der Verarbeitung oder der Weiterleitung an den nächsten Netzwerkteilnehmer beginnen können. Auf diese Weise kann der Durchsatz bei der Datenübertragung erhöht werden. Ferner kann das Telegrammelement variabel für verschiedene Datenübertragungsprotokolle eingesetzt werden und ist beispielsweise nicht auf das echtzeitfähige EtherCAT Datenübertragungsprotokoll beschränkt.

In einer weiteren Ausführungsform sind die Telegramme als EtherCAT Telegramme verwirklicht und der Netzwerkverteiler ist ausgelegt die EtherCAT Telegramme zu verarbeiten. Hierbei ist das Telegrammelement als EtherCAT Protokolltyp ausgebildet. Der Netzwerkverteiler wird durch die Ausbildung des Protokollchips als EtherCAT Slave Controller zu einem gewöhnlichen EtherCAT Slaveteilnehmer, der die EtherCAT Telegramme verarbeiten kann. In diesem Fall kann eine Freigabe sowie eine Sperrung der Verarbeitung des Telegramms mittels dem EtherCAT Protokolltyp angezeigt werden, der beispielsweise zwei Werte umfassen kann, wobei der erste Wert standardmäßig die Freigabe der Verarbeitung mit dem Wert 0x1 (im Hexadezimalsystem) anzeigt, das heißt der EtherCAT Slave Controller weiß in dem Fall, dass er adressiert ist und beginnt mit der Verarbeitung des Telegramms, und der zweite Wert kann zum Beispiel in Form des Werts 0x6 (im Hexadezimalsystem) dem EtherCAT Slave Controller die Sperrung der Verarbeitung des Telegramms anzeigen. Der Netzwerkverteiler kann einfach in bestehende Automatisierungsnetzwerke integriert werden, da der erfindungsgemäße Netzwerkverteiler auf die bewährte EtherCAT Technologie aufbaut und mit bestehenden EtherCAT Netzwerken kompatibel ist.

Erfindungsgemäß wird des Weiteren ein Verfahren zur Datenübertragung in einem Automatisierungsnetzwerk vorgeschlagen. Dabei weist das Automatisierungsnetzwerk einen Netzwerkverteiler auf, der ausgelegt ist, das Verfahren zur Datenübertragung auszuführen. Das vorgeschlagene Verfahren ist vorteilhaft auf die im Automatisierungsnetzwerk eingesetzten Netzwerkkomponenten abgestimmt. Es bietet in der Zusammenschau den Vorteil des verbesserten Datendurchsatzes bei der Datenübertragung in dem Automatisierungsnetzwerk und ermöglicht leistungsfähigere Anwendungsgebiete, bei denen bislang zum Beispiel aufgrund zu hoher produzierter Datenmengen bei Bildgebungs- oder Messmethoden an die Kapazitätsgrenzen gestoßen wurde.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 einen schematischen Aufbau eines Automatisierungsnetzwerks mit Netzwerkverteilern, das für eine Ausführung eines Verfahrens zur Datenübertragung ausgelegt ist; und
Figur 2 einen schematischen Aufbau eines Netzwerkverteilers.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten handelt.

Automatisierungsnetzwerke sind üblicherweise als Feldbussysteme verwirklicht, bei denen die Netzwerkeilnehmer über den Feldbus miteinander vernetzt sind. Die Netzwerkteilnehmer können als wenigstens ein Masterteilnehmer, als wenigstens ein Netzwerkverteiler sowie als mehrere Netzwerkteilnehmer bzw. Slaveteilnehmer ausgebildet sein. Die genannten Netzwerkteilnehmer können dazu ausgelegt sein mit Steuerungseinheiten Daten austauschen, wobei dazu in der Regel echtzeitfähige Datenübertragungsprotokolle wie beispielsweise das EtherCAT Datenübertragungsprotokoll eingesetzt werden. Daneben kann das Automatisierungsnetzwerk auch Netzwerkteilnehmer aufweisen, die andere Datenübertragungsprotokolle verarbeiten können wie beispielsweise TCP/IP (TCP/IP: Transmission Control Protocol/Internet Protocol), Ethernet, etc. Diese Netzwerkteilnehmer müssen nicht für Steuerungsaufgaben adressiert sein. Beispielsweise können diese Datenübertragungsprotokoll-Daten Diagnoseinformationen über das Automatisierungsnetzwerk umfassen. Die Erfindung wird nachfolgend beispielhaft anhand des echtzeitfähigen EtherCAT Datenübertragungsprotokolls erläutert.

Die über das Datenleitungsnetz im Automatisierungsnetzwerk angeschlossenen oben genannten Netzwerkteilnehmer können über Netzwerkverteiler, sogenannte "Switche" oder "Branche" miteinander verbunden sein. Die Netzwerkverteiler dienen zudem dazu, den Datenaustausch der Teilnehmer in den Segmenten zu koordinieren und die Telegramme rechtzeitig an ihr Ziel zu leiten. Ein Netzwerkverteiler, der neben seiner Funktion des Routings von Telegrammen über die einzelnen Ein-/Ausgangs-Ports des Netzwerkverteilers zusätzlich noch als gewöhnlicher Netzwerk- oder Slaveteilnehmer fungiert, ist bislang nicht verwirklicht.

Demnach liegt die Kernidee der vorliegenden Erfindung in einem Gerät Netzwerkverteiler, der über die Funktion des Routings der Telegramme verfügt, um Netzwerk- bzw. Slaveteilnehmer miteinander zu kombinieren, der in der Lage ist, Telegramme von dem Masterteilnehmer als Netzwerk- bzw. Slaveteilnehmer zu verarbeiten. Der vorgeschlagene Netzwerkverteiler verfügt über eine Doppelfunktionalität und kann Telegramme mit einer geeigneten Anzeige in den Telegrammen verarbeiten und/oder routen. Die Erfindung ist hierbei nicht auf die Verwendung des EtherCAT Datenübertragungsprotokolls beschränkt, auch wenn dies das bevorzugte Datenübertragungsprotokoll darstellt, sondern kann in allen Automatisierungsnetzwerken eingesetzt werden, in denen Telegramme geroutet und zusätzlich verarbeitet werden sollen.

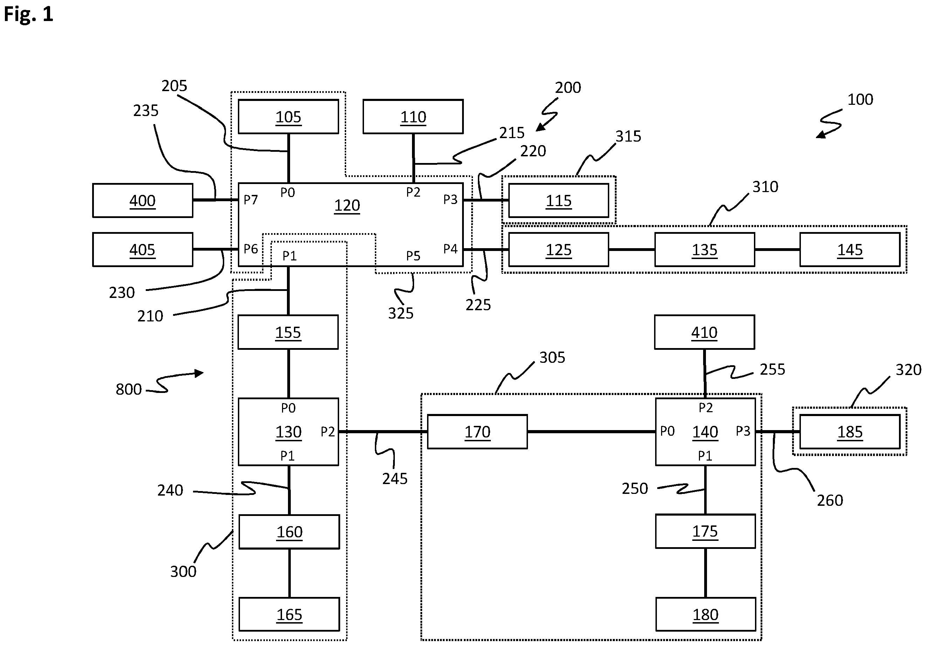

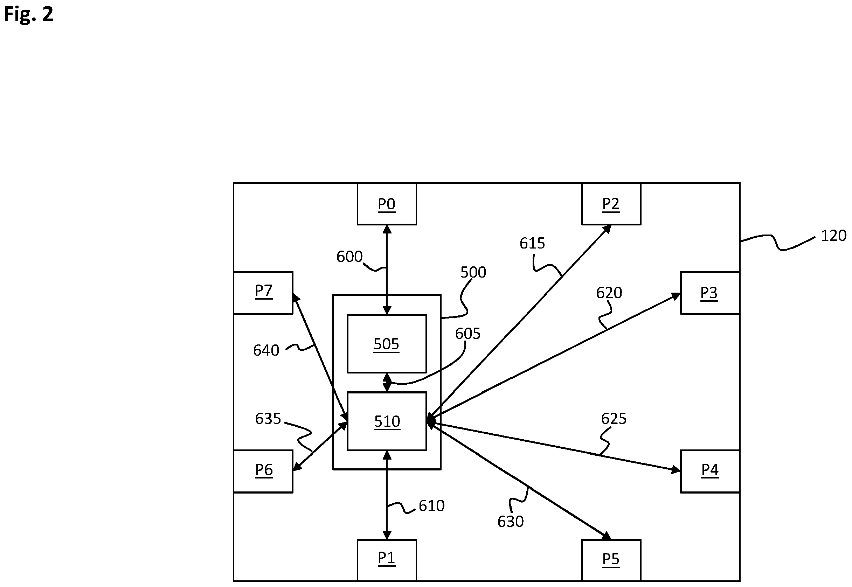

Der Aufbau und die Funktionsweise des erfindungsgemäßen Automatisierungsnetzwerks und des Netzwerkverteilers wird nachfolgend anhand der Figuren 1 und 2 beschrieben, wobei in der Beschreibung, sofern sinnvoll und erforderlich, die zugehörigen Bezugszeichen aus beiden Figuren Verwendung finden.

Figur 1 zeigt einen schematischen Aufbau eines Automatisierungsnetzwerks 100 mit Netzwerkteilnehmern, das für ein Verfahren zur Datenübertragung ausgelegt ist. Das Automatisierungsnetzwerk 100 umfasst Netzwerkteilnehmer 800, die über ein Datenleitungsnetz 200 miteinander verbunden sind. Wenigstens ein Netzwerkteilnehmer 800 des Automatisierungsnetzwerks 100 ist als ein Masterteilnehmer 105 ausgebildet und wenigstens ein Netzwerkteilnehmer 800 ist als Netzwerkverteiler ausgelegt. Der Masterteilnehmer 105 ist über eine erste Datenleitung 205 mit einem ersten Ein-/Ausgangs-Port P0 eines ersten Netzwerkverteilers 120 verbunden und kann ein sechstes Segment 325 bilden. Der erste Netzwerkverteiler 120 kann über einen dritten Ein-/Ausgangs-Port P2 über eine dritte Datenleitung 215 mit einem weiteren Masterteilnehmer 110 verbunden sein. Dabei kann beispielsweise nur der Masterteilnehmer 105, der über die erste Datenleitung 205 mit dem ersten Ein-/Ausgangs-Port P0 des ersten Netzwerkverteilers 120 verbunden ist, dazu ausgelegt sein, eine zentrale Konfiguration des Automatisierungsnetzwerks 100 mit seinen Netzwerkverteilern und Netzwerkteilnehmern 800 vorzunehmen.

Über einen vierten Ein-/Ausgangs-Port P3 des ersten Netzwerkverteilers 120 und eine vierte Datenleitung 220 kann der erste Netzwerkverteiler 120 mit einem vierten Segment 315 des Automatisierungsnetzwerks 100 verbunden sein. Beispielsweise kann das vierte Segment 315 einen ersten Netzwerkteilnehmer 115 umfassen. Zur besseren Übersichtlichkeit werden in Figur 1 lediglich die Ein-/Ausgangs-Ports der Netzwerkverteiler dargestellt. Gleichwohl weisen die anderen Teilnehmer in dem Automatisierungsnetzwerk 100 Ein-/Ausgangs-Ports auf, über die die Teilnehmer über das Datenleitungsnetz 200 miteinander verbunden sind. Nachfolgend wird auf diesen Aspekt nicht mehr eingegangen. Der erste Netzwerkteilnehmer 115 kann dabei beispielsweise als Kopplerelement EK1100 der Firma Beckhoff Automation GmbH & Co. KG ausgebildet sein und dazu ausgelegt sein, eine Datenkommunikation mit einer ersten Datenübertragungsrate mit 100 Mbit/s bzw. einer ersten Symbolrate von 100 MBaud zu ermöglichen und Telegramme des Masterteilnehmers 105 zu verarbeiten. Der erste Netzwerkteilnehmer 115 kann demnach als ein Slaveteilnehmer ausgelegt sein. Das vierte Segment 315 kann exemplarisch wie beschrieben ausgebildet sein. Darüber hinaus ist denkbar, dass das vierte Segment 315 von der beschriebenen Ausgestaltung abweicht und weitere Netzwerkteilnehmer 800 bzw. Slaveteilnehmer umfasst, die nicht dargestellt sind.

Der erste Netzwerkverteiler 120 kann über einen fünften Ein-/Ausgangs-Port P4 des ersten Netzwerkverteilers 120 und eine fünfte Datenleitung 225 mit einem dritten Segment 310 des Automatisierungsnetzwerks 100 verbunden sein. Das dritte Segment 310 kann einen zweiten Netzwerkteilnehmer 125, einen dritten Netzwerkteilnehmer 135 und einen vierten Netzwerkteilnehmer 145 umfassen, wobei der zweite bis vierte Netzwerkteilnehmer 125, 135, 145 jeweils als Slaveteilnehmer zur Verarbeitung der Telegramme von dem Masterteilnehmer 105 ausgelegt sein können. Der zweite Netzwerkteilnehmer 125 kann zum Beispiel als ein Kopplerelement ausgebildet sein. Der dritte Netzwerkteilnehmer 135 kann beispielsweise als Simple Branch ausgebildet sein, wobei der Simple Branch dazu ausgelegt sein kann, neben dem in dem Verfahren zur Datenübertragung verwendeten Protokoll, auch noch Routing-Funktionalität aufzuweisen und weitere Protokolle, wie zum Beispiel das TCP/IP-Protokoll (Transmission Control Protocol/Internet Protocol), zu unterstützen.

Der vierte Netzwerkteilnehmer 145 kann zum Beispiel ebenfalls als Simple Branch ausgebildet sein. Der erste bis vierte Netzwerkteilnehmer 125, 135, 145 in dem dritten Segment 310 können gleichermaßen dazu ausgelegt sein, eine Datenkommunikation mit einer zweiten Datenübertragungsrate mit 1 Gbit/s bzw. mit einer zweiten Symbolrate von 1 GBaud umzusetzen. Das dritte Segment 310 kann also beispielsweise im Unterschied zum vierten Segment 315 statt mit der ersten Datenübertragungsrate mit 100 Mbit/s mit der zweiten Datenübertragungsrate mit 1 Gbit/s betrieben werden. Die oben genannte erste und zweite Datenübertragungsrate sowie im Folgenden genannte Datenübertragungsraten können auch abweichend von den erläuterten Werten umgesetzt werden, wie zum Beispiel die zweite Datenübertragungsrate mit 2,5 Gbit/s oder 5 Gbit/s oder 10 Gbit/s, etc..

Beispielsweise kann an einem sechsten Ein-/Ausgangs-Port P5 des ersten Netzwerkverteilers 120 keine Datenleitung mit einem oder mehreren Netzwerkteilnehmern angeschlossen sein. Hierbei ist der sechste Ein-/Ausgangs-Port P5 exemplarisch gewählt worden. Es ist ferner denkbar, dass ein anderer Ein-/Ausgangs-Port des ersten Netzwerkverteilers 120 derart ausgebildet ist oder dass an dem sechsten Ein-/Ausgangs-Port P5 des ersten Netzwerkverteilers 120 Netzwerkteilnehmer angeschlossen sind.

Über einen siebten Ein-/Ausgangs-Port P6 und eine sechste Datenleitung 230 ist der erste Netzwerkverteiler 120 mit einem dreizehnten Netzwerkteilnehmer 405 verbunden. Dabei kann der dreizehnte Netzwerkteilnehmer 405 beispielsweise nicht als Netzwerkteilnehmer, der das EtherCAT Datenübertragungsprotokoll verarbeitet, sondern als Ethernetteilnehmer ausgebildet sein, wobei für den Ethernetteilnehmer charakteristisch sein kann, lediglich Telegramme mit zugrundeliegendem Ethernet Datenübertragungsprotokoll zu verarbeiten. In diesem Zusammenhang ist denkbar, dass der dreizehnte Netzwerkteilnehmer 405 kein eigenständiges Segment im Automatisierungsnetzwerk bildet. Beispielsweise ist der dreizehnte Netzwerkteilnehmer 405 dazu ausgelegt, die Datenkommunikation mit der zweiten Datenübertragungsrate mit 1 Gbit/s umzusetzen.

Über einen achten Ein-/Ausgangs-Port P7 und eine siebte Datenleitung 235 kann der erste Netzwerkverteiler 120 mit einem zwölften Netzwerkteilnehmer 400 verbunden sein. Der zwölfte Netzwerkteilnehmer 400 kann ebenfalls ausgelegt sein, das Ethernet Datenübertragungsprotokoll zu verarbeiten und einen Ethernetteilnehmer darstellen. Beispielsweise kann der Ethernetteilnehmer ausgebildet sein die Datenkommunikation mit der ersten Datenübertragungsrate mit 100 Mbit/s umzusetzen. Gleichermaßen wie der dreizehnte Netzwerkteilnehmer 405 kann auch der zwölfte Netzwerkteilnehmer 400 kein eigenständiges Segment in dem Automatisierungsnetzwerk 100 bilden.

Der erste Netzwerkverteiler 120 kann Teil des sechsten Segments 325 sein. Über einen zweiten Ein-/Ausgangs-Port P1 und eine zweite Datenleitung 210 kann der erste Netzwerkverteiler 120 mit einem fünften Netzwerkteilnehmer 155 verbunden sein. Der fünfte Netzwerkteilnehmer 155 kann für eine Datenkommunikation mit der zweiten Datenübertragungsrate ausgelegt sein. Der fünfte Netzwerkteilnehmer 155 kann über die zweite Datenleitung 210 mit einem ersten Ein-/Ausgangs-Port P0 eines zweiten Netzwerkverteilers 130 verbunden sein und als Slaveteilnehmer zur Verarbeitung von Telegrammen von dem Masterteilnehmer 105 ausgebildet sein.

Der zweite Netzwerkverteiler 130 kann über einen zweiten Ein-/Ausgangs-Port P1 des zweiten Netzwerkverteilers 130 und über eine achte Datenleitung 240 mit einem sechsten Netzwerkteilnehmer 160 verbunden sein. Zum Beispiel kann der sechste Netzwerkteilnehmer 160 ebenfalls als oben stehender Simple Branch ausgebildet sein und Telegramme des Masterteilnehmers 105 verarbeiten. Weiterhin kann der sechste Netzwerkteilnehmer 160 nachfolgend an der achten Datenleitung 240 einen siebten Netzwerkteilnehmer 165 aufweisen. Der siebte Netzwerkteilnehmer 165 kann den letzten Netzwerkteilnehmer in einem ersten Segment 300 bilden, das sich von dem zweiten Ein-/Ausgangs-Port P1 des ersten Netzwerkverteilers 120 bis zum siebten Netzwerkteilnehmer 165 erstreckt, da die Netzwerkteilnehmer 800 in den einzelnen Segmenten in der Regel in einer Kette angeordnet sind. Ferner kann der siebte Netzwerkteilnehmer 165 als ein Kopplerelement ausgebildet sein und für die Verarbeitung der Telegramme von dem Masterteilnehmer 105 geeignet sein. Beispielsweise kann der zweite Netzwerkverteiler 130 Teil des ersten Segments 300 sein, sofern der zweite Ein-/Ausgangs-Port P1 des zweiten Netzwerkverteilers 130 dafür eingestellt ist.

Das erste Segment 300, beginnend mit dem zweiten Ein-/Ausgangs-Port P1 des ersten Netzwerkverteilers 120, dem fünften Netzwerkteilnehmer 155, dem zweiten Netzwerkverteiler 130, dem sechsten Slaveteilnehmer 160 und dem siebten Netzwerkteilnehmer 165 kann für eine Datenkommunikation mit der zweiten Datenübertragungsrate mit 1 Gibt/s ausgelegt sein, da der fünfte Netzwerkteilnehmer 155, der sechste Netzwerkteilnehmer 160 und der siebte Netzwerkteilnehmer 165 beispielsweise derart ausgelegt sind. Es ist jedoch auch denkbar, dass der fünfte Netzwerkteilnehmer 155, der sechste Netzwerkteilnehmer 160 und der siebte Netzwerkteilnehmer 165 gleichermaßen wie der erste Netzwerkverteiler 120 und der zweite Netzwerkverteiler 130 in der Lage sind, sowohl die zweite Datenübertragungsrate mit 1 Gbit/s als auch die erste Datenübertragungsrate mit 100 Mbit/s umzusetzen. In diesem Zusammenhang kann das erste Segment 300 weitere, nicht dargestellte Netzwerkteilnehmer umfassen, die ausgelegt sind, die erste Datenübertragungsrate umzusetzen. In dem geschilderten Fall kann die Datenübertragungsrate für die Teilnehmer des ersten Segments 300 einheitlich auf die erste Datenübertragungsrate gesetzt werden. Dies gilt für die anderen Segmente gleichermaßen, auch sie können weitere Netzwerkteilnehmer aufweisen, die ausgelegt sind nur die erste Datenübertragungsrate umzusetzen. Für die Beschreibung der anderen Segmente wird jedoch nicht erneut auf diese Eigenschaft hingewiesen.

Über einen dritten Ein-/Ausgangs-Port P2 und eine neunte Datenleitung 245 ist der zweite Netzwerkverteiler 130 mit einem achten Netzwerkteilnehmer 170 verbunden. Der achte Netzwerkteilnehmer 170 bildet beispielsweise den ersten Netzwerkteilnehmer in einem zweiten Segment 305 und kann für die Verarbeitung der Telegramme von dem Masterteilnehmer 105 vorgesehen sein. Der achte Netzwerkteilnehmer 170 kann zum Beispiel für eine Datenkommunikation mit der zweiten Datenübertragungsrate ausgelegt sein. Der achte Netzwerkteilnehmer 170 ist über die achte Datenleitung 240 ferner mit einem ersten Ein-/Ausgangs-Port P0 eines dritten Netzwerkverteilers 140 verbunden. Der dritte Netzwerkverteiler 140 kann Teil des zweiten Segments 305 sein. Über einen dritten Ein-/Ausgangs-Port P2 und eine elfte Datenleitung 255 kann der dritte Netzwerkverteiler 140 mit einem vierzehnten Netzwerkteilnehmer 410 verbunden sein. Zum Beispiel ist der vierzehnte Netzwerkteilnehmer 410 als Ethernet Switch ausgebildet, der das Ethernet Datenübertragungsprotokoll verarbeitet. In dem Automatisierungsnetzwerk 100 kann für den vierzehnten Netzwerkteilnehmer 410 gleichermaßen wie für den zwölften und dreizehnten Netzwerkteilnehmer 400, 405 vorgesehen sein, kein eigenständiges Segment des Automatisierungsnetzwerks 100 zu bilden, da beispielsweise nur Netzwerkteilnehmer, die das EtherCAT Datenübertragungsprotokoll verarbeiten dafür vorgesehen sind.

Der dritte Netzwerkverteiler 140 kann über einen vierten Ein-/Ausgangs-Port P3 und eine zwölfte Datenleitung 260 mit einem elften Netzwerkteilnehmer 185 eines fünften Segments 320 des Automatisierungsnetzwerks 100 verbunden sein. Beispielsweise kann der elfte Netzwerkteilnehmer 185 ausgelegt sein die erste Datenübertragungsrate umzusetzen und Telegramme von dem Masterteilnehmer 105 zu verarbeiten. Über einen zweiten Ein-/Ausgangs-Port P1 und eine zehnte Datenleitung 250 kann der dritte Netzwerkverteiler 140 mit einem neunten Netzwerkteilnehmer 175 verbunden sein. Der neunte Netzwerkteilnehmer 175 kann Teil des zweiten Segments 305 und als ein Kopplerelement ausgebildet sein, um Telegramme von dem Masterteilnehmer 105 zu verarbeiten. Der neunte Netzwerkteilnehmer 175 kann für die Umsetzung der zweiten Datenübertragungsrate ausgelegt sein. Nachfolgend an den neunten Netzwerkteilnehmer 175 kann an die zehnte Datenleitung 250 ein zehnter Netzwerkteilnehmer 180 angeschlossen sein, der ebenfalls als Slaveteilnehmer zur Verarbeitung der Telegramme von dem Masterteilnehmer 105 ausgelegt sein kann. Der zehnte Netzwerkteilnehmer 180 kann beispielsweise den letzten Netzwerkteilnehmer, der in einer Kette angeordneten Netzwerkteilnehmer in dem zweiten Segment 305 bilden.

Der Masterteilnehmer 105 kann dazu ausgelegt sein mit einem Telegrammelement in dem jeweiligen zu versendenden Telegramm anzuzeigen, dass das jeweilige Telegramm für eine Verarbeitung durch die Netzwerkteilnehmer freigegeben ist, nachfolgend als entsperrtes Telegramm bezeichnet. Das heißt der erste bis dritte Netzwerkverteiler 120, 130, 140 können Telegramme verarbeiten, für die der Masterteilnehmer 105 die Freigabe der Verarbeitung mit dem Telegrammelement kennzeichnet. In diesem Zusammenhang können der erste bis dritte Netzwerkverteiler 120, 130, 140 ausgelegt sein, die Telegramme nach der Verarbeitung durch die Netzwerkverteiler jeweils über einen fest zugeordneten weiteren Ein-/Ausgangs-Port, beispielsweise den zweiten Ein-/Ausgangs-Port P1 auszugeben, wenn an dem fest zugeordneten zweiten Ein-/Ausgangs-Port P1 des ersten bis dritten Netzwerkverteilers 120, 130, 140 weitere Netzwerkteilnehmer 800 angeschlossen sind. Der fest zugeordnete weitere Ein-/Ausgangs-Port kann auch jeder weitere dritte bis achte Ein-/Ausgangsport P2 bis P7 eines ersten bis dritten Netzwerkverteilers 120, 130, 140 sein. Mit dem Begriff fest zugeordneter zweiter Ein-/Ausgangs-Port P1 wird ein zweiter Ein-/Ausgangs-Port P1 des entsprechenden Netzwerkverteilers bezeichnet, über den der entsprechende Netzwerkverteiler kein Routing des jeweiligen Telegramms über den zweiten Ein-/Ausgangs-Port P1 des entsprechenden Netzwerkverteilers vornimmt, wenn das Telegramm entsperrt ist.

Der Masterteilnehmer 105 kann die Freigabe der Verarbeitung eines Telegramms für die Netzwerkteilnehmer mit dem oben genannten Telegrammelement anzeigen. Darüber hinaus kann der Masterteilnehmer 105 ausgelegt sein, die Sperrung der Verarbeitung eines Telegramms durch die Netzwerkteilnehmer ebenfalls mit dem Telegrammelement, jedoch in abweichender Weise zur Anzeige der Freigabe der Verarbeitung eines Telegramms zu kennzeichnen. Ist das Telegrammelement beispielsweise in Form eines Datenelements mit einem ersten oder zweiten Wert ausgebildet, so kann der Masterteilnehmer 105 zum Beispiel eine Freigabe der Verarbeitung des Telegramms durch die Netzwerkteilnehmer mit dem ersten Wert des Datenelements anzeigen. Mit dem zweiten Wert des Datenelements kann der Masterteilnehmer 105 den Netzwerkteilnehmern sowie dem ersten bis dritten Netzwerkverteiler 120, 130, 140 beispielsweise eine Sperrung der Verarbeitung des Telegramms anzeigen.

Sind die Telegramme als EtherCAT Telegramme ausgebildet, so kann das Telegrammelement insbesondere in Form eines EtherCAT Protokolltyps ausgebildet sein, wobei der Masterteilnehmer 105 eine Freigabe der Verarbeitung des jeweiligen Telegramms durch die Netzwerkteilnehmer mithilfe eines ersten Werts des EtherCAT Protokolltyps in dem jeweiligen Telegramm, beispielsweise mithilfe des Werts 0x1 (im Hexadezimalsystem) anzeigt. Die Netzwerkteilnehmer sowie die Netzwerkverteiler in dem entsprechenden EtherCAT Segment erkennen an diesem Wert, dass das EtherCAT Telegramm für die Verarbeitung freigegeben ist und beginnen mit der Verarbeitung von Datagrammen in dem EtherCAT Telegramm. Der EtherCAT Protokolltyp weist einen zweiten Wert auf, der verschieden von dem ersten Wert mit 0x1 (im Hexadezimalsystem) ausgebildet ist, zum Beispiel kann der zweite Wert dem Wert 0x6 (im Hexadezimalsystem) entsprechen, wenn das EtherCAT Telegramm für die Verarbeitung durch die Netzwerkteilnehmer, inkl. der Netzwerkverteiler, in dem jeweiligen EtherCAT Segment gesperrt ist, nachfolgend als gesperrtes Telegramm bezeichnet.

Auch ist denkbar, dass der Masterteilnehmer 105 die Freigabe der Verarbeitung eines Telegramms für die Netzwerkteilnehmer durch Hinzufügen des Telegrammelements anzeigt, während ein Telegramm, das zum Beispiel nicht für die Verarbeitung freigegeben ist, kein Telegrammelement aufweist.

Das in Figur 1 gezeigte Automatisierungsnetzwerk 100 kann als EtherCAT Netzwerk ausgebildet sein und die Datenübertragung zwischen dem Masterteilnehmer 105 und den einzelnen Netzwerkteilnehmern kann mittels dem echtzeitfähigen EtherCAT Datenübertragungsprotokoll erfolgen. In diesem Zusammenhang stellen die in Figur 1 gezeigten Segmente EtherCAT Segmente dar, wobei der zwölfte bis vierzehnte Netzwerkteilnehmer 400, 405, 410 jeweils kein EtherCAT Segment bilden, da der zwölfte bis vierzehnte Netzwerkteilnehmer 400, 405, 410 beispielsweise nicht für eine Verarbeitung des EtherCAT Datenübertragungsprotokolls ausgebildet sind.

Der Masterteilnehmer 105 kann dazu ausgelegt sein, ein Konfigurationstelegramm an den ersten Netzwerkverteiler 120 über die erste Datenleitung 205 zu versenden, um den einzelnen Ein-/Ausgangs-Ports des ersten Netzwerkverteilers 120 Telegrammkennungen der Telegramme von dem Masterteilnehmer 105 zuzuordnen, über die der erste Netzwerkverteiler 120 die Telegramme ausgibt. Beispielsweise kann der Masterteilnehmer 105 die einzelnen Telegramme mit einer Telegrammkennung kennzeichnen, wobei die Telegrammkennung in einem EtherCAT Netzwerk zum Beispiel als Segmentadresse verwirklicht sein kann, da die Telegramme von dem Masterteilnehmer 105 von allen Netzwerkteilnehmern in einem EtherCAT Segment durchlaufen werden. In einem Automatisierungsnetzwerk 100, das nicht als EtherCAT Netzwerk ausgebildet ist und die Datenübertragung mit einem von dem EtherCAT Datenübertragungsprotokoll abweichenden Datenübertragungsprotokoll erfolgt, kann die Telegrammkennung als eine Portadresse, eine VLAN-Adresse (VLAN: Virtual Local Area Network), eine MAC-Adresse (MAC: Media Access Control), in Form eines Symbols oder Werts oder davon abweichend ausgestaltet sein.

Die Zuordnung der Telegrammkennung eines Telegramms zu dem entsprechenden Ein-/Ausgangs-Port des ersten Netzwerkverteilers 120, über den der erste Netzwerkverteiler 120 das jeweilige Telegramm an die Netzwerkteilnehmer eines Segments ausgibt, kann beispielsweise in einer Routingtabelle in einer Speichereinheit des ersten Netzwerkverteilers 120 hinterlegt werden, die in Figur 1 nicht dargestellt sind. Auch ist denkbar, dass die Zuordnung der einzelnen Ein-/Ausgangs-Ports des ersten Netzwerkverteilers 120 zu den jeweiligen Telegrammkennungen der Telegramme bereits in der Speichereinheit des ersten Netzwerkverteilers 120 hinterlegt ist. Gleichzeitig kann der Masterteilnehmer 105 mit dem Konfigurationstelegramm eine Einstellung des ersten Netzwerkverteilers 120 vornehmen, beispielsweise wie der erste Netzwerkverteiler 120 verfahren soll, wenn der erste Netzwerkverteiler 120 ein gesperrtes Telegramm mit einer Telegrammkennung über den ersten Ein-/Ausgangs-Port P0 empfängt.

Auch kann der Masterteilnehmer 105 mit dem Konfigurationstelegramm im ersten Netzwerkverteiler 120 einstellen, dass der erste Netzwerkverteiler 120 ein Telegramm mit einer Telegrammkennung, mit der kein direkt an den ersten Netzwerkverteiler 120 angeschlossenes Segment mit Netzwerkteilnehmern ansprechbar ist, über den zweiten Ein-/Ausgangs-Port P1 des ersten Netzwerkverteilers 120 ausgibt, und den zweiten Ein-/Ausgangs-Port P1 dem Telegramm mit der Telegrammkennung in der Routingtabelle zuordnet, vorausgesetzt das Telegramm mit der Telegrammkennung zeigt mit dem Telegrammelement eine Sperrung der Verarbeitung für den ersten Netzwerkverteiler 120 an. Der Masterteilnehmer 105 kann das Konfigurationstelegramm zu Einstellungszwecken vor dem eigentlichen Telegrammverkehr im Steuerungsbetrieb des Automatisierungsnetzwerks 100 versenden.

Versendet der Masterteilnehmer 105 ein gesperrtes Telegramm mit einer Telegrammkennung über die erste Datenleitung 205 an den ersten Netzwerkverteiler 120, so prüft der erste Netzwerkverteiler 120 beim Empfang des gesperrten Telegramms anhand der Telegrammkennung, welcher der in der Routingtabelle des ersten Netzwerkverteilers 120 hinterlegten Ein-/Ausgangs-Ports des ersten Netzwerkverteilers 120 dem jeweiligen Telegramm mit der Telegrammkennung zugeordnet ist. Das heißt, der erste Netzwerkverteiler 120 kann über die jeweilige Telegrammkennung eines Telegramms ein Routing des Telegramms über die einzelnen Ein-/Ausgangs-Ports des ersten Netzwerkverteilers 120 durchführen. Ist die Telegrammkennung des vom Masterteilnehmer 105 versendeten Telegramms beispielsweise in Form einer Segmentadresse verwirklicht, die dem ersten Segment 300 zugeordnet werden kann, so kann der erste Netzwerkverteiler 120 aufgrund der mit dem Konfigurationstelegramm vorgenommenen Einstellung, das mit der Telegrammkennung ansprechbare erste Segment 300 dem zweiten Ein-/Ausgangs-Port P1 des ersten Netzwerkverteilers 120 zuordnen.

Für die Strukturierung des Automatisierungsnetzwerks 100 in Segmente, die in einem EtherCAT Netzwerk als EtherCAT Segmente ausgebildet sind, sind verschiedene Ausgestaltungen denkbar. Beispielsweise kann ein EtherCAT Segment an einem Ein-/Ausgangs-Port eines Netzwerkverteilers, der als Netzwerkverteiler ausgebildet ist, beginnen, über den nur Netzwerkteilnehmer angeschlossen sind. Beispielsweise kann sich ein solches EtherCAT Segment über den zweiten Netzwerkteilnehmer 125, den dritten Netzwerkteilnehmer 135 und den vierten Netzwerkteilnehmer 145 erstrecken und das dritte Segment 310 umfassen. Weiterhin kann ein EtherCAT Segment an einem Ein-/Ausgangs-Port eines Netzwerkverteilers, der als Netzwerkverteiler ausgebildet ist, beginnen, über den Netzwerkteilnehmer sowie weitere Netzwerkverteiler, die als Netzwerkteilnehmer ausgebildet sein können, angeschlossen sind, wobei bei dem als Netzwerkteilnehmer ausgebildeten weiteren Netzwerkverteiler dann ein weiterer Ein-/Ausgangs-Port dafür eingestellt sein muss. Beispielsweise kann ein derart ausgestaltetes EtherCAT Segment den fünften Netzwerkteilnehmer 155, den zweiten Netzwerkverteiler 130 (sofern der zweite Ein-/Ausgangs-Port P1 des zweiten Netzwerkverteilers 130 entsprechend eingestellt ist), den sechsten Netzwerkteilnehmer 160 und den siebten Netzwerkteilnehmer 165 umfassen, also dem ersten Segment 300 entsprechen. Überdies kann ein EtherCAT Segment bei dem Masterteilnehmer 105 beginnen und bei dem nächsten Netzwerkverteiler enden. Beispielsweise kann das EtherCAT Segment den Masterteilnehmer 105 umfassen sowie den ersten Netzwerkverteiler 120 und in Form des sechsten Segments 325 umgesetzt sein.

Bevor der erste Netzwerkverteiler 120 das gesperrte Telegramm mit der Telegrammkennung in Form der Segmentadresse des ersten Segments 300, die beispielsweise das Symbol a umfassen kann, über den zweiten Ein-/Ausgangs-Port P1 des ersten Netzwerkverteilers 120 ausgibt, kann mit dem Konfigurationstelegramm eingestellt worden sein, dass der erste Netzwerkverteiler 120 den zweiten Wert des Datenelements des Telegramms, auf den ersten Wert setzt, um den Netzwerkteilnehmern in dem ersten Segment 300 eine Freigabe der Verarbeitung des Telegramms anzuzeigen. Auch kann mit dem Konfigurationstelegramm im ersten Netzwerkverteiler 120 eingestellt worden sein, dass der erste Netzwerkverteiler 120 den zweiten Wert des EtherCAT Protokolltyps auf den ersten Wert des EtherCAT Protokolltyps setzt, gemäß obiger Beschreibung. Dabei kann der Begriff setzen im Sinne von Überschreiben der Werte verstanden werden. Überdies ist denkbar, dass der erste Netzwerkverteiler 120 das gesperrte Telegramm bereits nach dem Empfang des gesperrten Telegramms über den ersten Ein-/Ausgangs-Port P0 des ersten Netzwerkverteilers 120 entsperrt hat. Beispielsweise kann der fünfte Netzwerkteilnehmer 155 die an ihn adressierten Ausgangsdaten des entsperrten Telegramms mit der Telegrammkennung a des ersten Segments 300 im Durchlauf lesen und seine Eingangsdaten in das entsperrte Telegramm legen, das von dem fünften Netzwerkteilnehmer 155 über die zweite Datenleitung 210 an den zweiten Netzwerkverteiler 130 weitergeleitet und vom zweiten Netzwerkverteiler 130 auf dem ersten Ein-/Ausgangs-Port P0 empfangen wird. Die obigen Erläuterungen zur Einstellung des ersten Netzwerkverteilers 120 gelten für den zweiten und dritten Netzwerkverteiler 130, 140 analog und sollen im Folgenden nicht wiederholt werden.

Nachdem der zweite Netzwerkverteiler 130 die an ihn adressierten Ausgangsdaten des entsperrten Telegramms mit der Telegrammkennung in Form der Segmentadresse a des ersten Segments 300 "on the fly" gelesen und seine Eingangsdaten in das entsperrte Telegramm gelegt hat, kann der zweite Netzwerkverteiler 130 das entsperrte Telegramm über den festgelegten zweiten Ein-/Ausgangs-Port P1 über die achte Datenleitung 240 an den sechsten Netzwerkteilnehmer 160 weiterleiten. Dies setzt voraus, dass der zweite Ein-/Ausgangs-Port P1 des zweiten Netzwerkverteilers 130 entsprechend vom Masterteilnehmer 105 eingestellt ist, sodass der zweite Netzwerkverteiler 130 das entsperrte Telegramm mit der Telegrammkennung in Form der Segmentadresse a des ersten Segments 300 und dem Telegrammelement, das dem zweiten Netzwerkverteiler 130 die Freigabe der Verarbeitung des Telegramms anzeigt, als Netzwerkteilnehmer verarbeiten kann. Der Masterteilnehmer 105 kann den zweiten Ein-/Ausgangs-Port P1 des zweiten Netzwerkverteilers 130 als den Ein-/Ausgangs-Port des zweiten Netzwerkverteilers 130 festlegen, über den der zweite Netzwerkverteiler 130 ein Telegramm nach der Verarbeitung des Telegramms ausgibt, sofern das Telegramm für die Verarbeitung freigegeben ist, die Freigabe mit dem Telegrammelement gemäß obiger Beschreibung angezeigt wird und das Telegramm ferner die Telegrammkennung in Form der Segmentadresse a des ersten Segments 300 umfasst.

Wird nachfolgend von dem entsperrten Telegramm für das erste Segment 300 gesprochen, so umfasst das entsperrte Telegramm stets die Telegrammkennung in Form der Segmentadresse a und das Telegrammelement, das die Freigabe der Verarbeitung des Telegramms für den entsprechenden Netzwerkteilnehmer anzeigt.

Der sechste Netzwerkteilnehmer 160 kann analog adressierte Ausgangsdaten lesen und Eingangsdaten in das entsperrte Telegramm legen und das entsperrte Telegramm über die achte Datenleitung an den siebten Netzwerkteilnehmer 165 weiterleiten. Der siebte Netzwerkteilnehmer 165 liest ebenso die an ihn adressierten Ausgangsdaten und fügt entsprechend Eingangsdaten in das entsperrte Telegramm ein. Weiterhin erkennt der siebte Netzwerkteilnehmer 165, dass nachfolgend nach ihm kein weiterer Netzwerkteilnehmer mehr an der achten Datenleitung 240 angeschlossen ist. Beispielsweise kann dazu ein Ein-/Ausgangs-Port des siebten Netzwerkteilnehmers 165 mit einem Schalter, den der siebte Netzwerkteilnehmer 165 umfassen kann, kurzgeschlossen sein und der siebte Netzwerkteilnehmer 165 kann derart eingestellt sein, dass der siebte Netzwerkteilnehmer 165 daraufhin das entsperrte Telegramm über die achte Datenleitung 240 an den zweiten Netzwerkverteiler 130 versendet. Der zweite Netzwerkverteiler 130 kann derart eingestellt sein, dass der zweite Netzwerkverteiler 130 das entsperrte Telegramm über die zweite Datenleitung 210 an den ersten Netzwerkverteiler 120 versendet. Der erste Netzwerkverteiler 120 kann derart konfiguriert sein, dass der erste Netzwerkverteiler 120 das entsperrte Telegramm von dem siebten Netzwerkteilnehmer 165 über die erste Datenleitung 205 an den Masterteilnehmer 105 zurücksendet.

Der erste Netzwerkverteiler 120 und der zweite Netzwerkverteiler 130 können jeweils als Netzwerkteilnehmer ausgebildet sein, um das Telegramm vom Masterteilnehmer 105 zu verarbeiten. Zusätzlich zur obigen Beschreibung kann der erste Netzwerkverteiler 120 neben der Eigenschaft, dass der erste Netzwerkverteiler 120 das vom Masterteilnehmer 105 versendete gesperrte Telegramm entsperrt, indem der erste Netzwerkverteiler 120 zum Beispiel den zweiten Wert des Datenelements des Telegramms auf den ersten Wert setzt, oder den zweiten Wert des EtherCAT Protokolltyps auf den ersten Wert setzt, oder das Telegrammelement selbst dem Telegramm hinzufügt, auch dazu ausgelegt sein, das entsperrte Telegramm zu verarbeiten. Dies gilt für den dritten Netzwerkverteiler 140 in gleichem Maße, denn auch der dritte Netzwerkverteiler 140 kann als Netzwerkteilnehmer ausgebildet sein und dazu ausgelegt sein, entsperrte Telegramm zu verarbeiten.

Ferner können der erste bis dritte Netzwerkverteiler 120, 130, 140 als Netzwerkverteiler ausgelegt sein und die Telegrammkennung für das Routing des Telegramms über die einzelnen Ein-/Ausgangs-Ports des ersten bis dritten Netzwerkverteilers 120, 130, 140 nutzen, die der jeweiligen Telegrammkennung in der entsprechenden Routingtabelle des ersten bis dritten Netzwerkverteilers 120, 130, 140 zugeordnet sind. Im Zusammenhang mit der für das Routing genutzten Telegrammkennung kann das an dem vierten Ein-/Ausgangs-Port P3 und/oder das an dem fünften Ein-/Ausgangs-Port P4 des ersten Netzwerkverteilers 120 angeschlossene vierte Segment 315 und/oder angeschlossene dritte Segment 310 insbesondere jeweils ein eigenständiges Segment bilden, und nicht dem Segment entsprechen, in dem der erste Netzwerkverteiler 120 selbst angeordnet ist. Der erste Netzwerkverteiler 120 bildet mit dem Masterteilnehmer 105 das sechste Segment 325. Alternativ kann der erste Netzwerkverteiler 120 auch Teil des ersten Segments 300 sein.

Im Zusammenhang mit der für das Routing genutzten Telegrammkennung kann das an dem dritten Ein-/Ausgangs-Port P2 des zweiten Netzwerkverteilers 130 angeschlossene zweite Segment 305 insbesondere ein eigenständiges Segment bilden, und nicht dem Segment entsprechen, in dem der zweite Netzwerkverteiler 130 selbst angeordnet ist. Ferner kann im Zusammenhang mit der für das Routing genutzten Telegrammkennung das an dem vierten Ein-/Ausgangs-Port P3 des dritten Netzwerkverteilers 140 angeschlossene fünfte Segment 320 insbesondere ein eigenständiges Segment bilden, und nicht dem Segment entsprechen, in dem der dritte Netzwerkverteiler 140 selbst angeordnet ist. In der in Figur 1 gezeigten Ausführungsform sind beispielsweise der zweite Netzwerkverteiler 130 und der dritte Netzwerkverteiler 140 jeweils Teil des ersten Segments 300 und des zweiten Segments 305, da die zweiten Ein-/Ausgangs-Ports P1 jeweils dafür eingestellt sein können. Insbesondere können die zweiten Ein-/Ausgangs-Ports P1 des zweiten und dritten Netzwerkverteilers 130, 140 jeweils als fest zugeordnete Ein-/Ausgangs-Ports eingestellt sein, über die der entsprechende Netzwerkverteiler 130, 140 ein entsperrtes Telegramm mit der Telegrammkennung in Form der Segmentadresse des jeweiligen Segments, in dem der zweite und dritte Netzwerkverteiler 130, 140 angeordnet sind, standardmäßig ohne Routing ausgibt, das heißt ohne einen Vergleich mit dem in der Routingtabelle hinterlegten Ein-/Ausgangs-Port zu der jeweiligen Telegrammkennung des Telegramms. Der erste Netzwerkverteiler 120 befindet sich beispielsweise im sechsten Segment 325. Daneben kann der erste Netzwerkverteiler 120 auch Teil des ersten Segments 300 sein, sofern der zweite Ein-/Ausgangs-Port P1 des ersten Netzwerkverteilers 120 entsprechend obiger Erläuterung eingestellt ist. Alternativ ist ebenfalls denkbar, dass der zweite Netzwerkverteiler 130 sowie der dritte Netzwerkverteiler 140 jeweils ein separates Segment bilden. Überdies können der erste bis dritte Netzwerkverteiler 120, 130, 140 auch derart ausgelegt sein, dass der erste bis dritte Netzwerkverteiler 120, 130, 140 jeweils nicht Teil eines Segments sind, an ihren Ein-/Ausgangs-Ports können aber einzelne Segmente angeschlossen sein.

Beim Empfang eines gesperrten Telegramms mit einer Telegrammkennung und einem Telegrammelement in Form eines Datenelements, die einem Segment des ersten Netzwerkverteilers 120 zugeordnet ist, wobei das Segment beispielsweise ein separates Segment an einem Ein-/Ausgangs-Port des ersten Netzwerkverteilers 120 sein kann, kann der erste Netzwerkverteiler 120 die Telegrammkennung für das Routing des gesperrten Telegramms über den in der Routingtabelle in der Speichereinheit des ersten Netzwerkverteilers 120 hinterlegten zugeordneten Ein-/Ausgangs-Port des ersten Netzwerkverteilers 120 nutzen. Vorher kann der erste Netzwerkverteiler 120 das gesperrte Telegramm für die Netzwerkteilnehmer zur Verarbeitung freigeben, in dem der erste Netzwerkverteiler 120 den zweiten Wert des Datenelements auf den ersten Wert setzt. Auch kann der erste Netzwerkverteiler 120 den zweiten Wert des EtherCAT Protokolltyps auf den ersten Wert setzen, wenn das Telegrammelement als EtherCAT Protokolltyp ausgebildet ist. Der erste Netzwerkverteiler 120 kann zudem ein gesperrtes Telegramm mit einer Telegrammkennung, die keinem Segment des ersten Netzwerkverteilers 120 zugeordnet ist, sondern beispielsweise dem ersten Segment 300 zugeordnet ist, in dem der zweite Netzwerkverteiler 130 angeordnet ist, die Telegrammkennung für das Routing des gesperrten Telegramms nutzen. Beispielsweise nutzt der erste Netzwerkverteiler 120 aufgrund der hinterlegten Zuordnung der Telegrammkennung in Form der Segmentadresse mit dem Symbol b zu dem zweiten Segment 305 und über den dabei zu routenden Ein-/Ausgangs-Port den zweiten Ein-/Ausgangs-Port P1 des ersten Netzwerkverteilers 120.

Der erste Netzwerkverteiler 120 gibt das gesperrte Telegramm mit der Telegrammkennung b beispielsweise unverändert über den zweiten Ein-/Ausgangs-Port P1 des ersten Netzwerkverteilers 120 über die zweite Datenleitung 210 an den fünften Netzwerkteilnehmer 155. Der fünfte Netzwerkteilnehmer 155 liest einen Kopfabschnitt des gesperrten Telegramms mit der Telegrammkennung b im Durchlauf, bis zu einem Telegrammelement, also zum Beispiel bis zu einem Datenfeld, dass das Datenelement mit dem zweiten Wert aufweist oder bis zu einem Datenfeld, dass den EtherCAT Protokolltyp mit dem zweiten Wert umfasst. Auch kann der Masterteilnehmer 105 das gesperrte Telegramm derart kennzeichnen, dass das gesperrte Telegramm kein Telegrammelement aufweist und nur ein entsperrtes Telegramm das Telegrammelement umfasst. Anhand des zweiten Werts des Datenelements oder des EtherCAT Protokolltyps erkennt der fünfte Netzwerkteilnehmer 155, dass der fünfte Netzwerkteilnehmer 155 nicht zur Verarbeitung der Nutzdaten des gesperrten Telegramms bestimmt ist, und sendet das gesperrte Telegramm über die zweite Datenleitung 210 an den zweiten Netzwerkverteiler 130. Der zweite Netzwerkverteiler 130 empfängt das gesperrte Telegramm mit der Telegrammkennung, der Segmentadresse b, über den ersten Ein-/Ausgangs-Port P0 und erkennt anhand der Telegrammkennung und der hinterlegten Zuordnung in der Speichereinheit, dass der der Telegrammkennung in Form der Segmentadresse b und der dem zweiten Segment 305 zugeordnete Ein-/Ausgangs-Port des zweiten Netzwerkverteilers 130 für die Ausgabe des Telegramms der dritte Ein-/Ausgangs-Port P2 des zweiten Netzwerkverteilers 130 ist.

Vor der Ausgabe des gesperrten Telegramms über den dritten Ein-/Ausgangs-Port P2 entsperrt der zweite Netzwerkverteiler 130 das gesperrte Telegramm, in dem der zweite Netzwerkverteiler 130 den zweiten Wert des Datenelements oder des EtherCAT Protokolltyps auf den ersten Wert setzt, um dem achten Netzwerkteilnehmer 170 bei der Ausgabe des entsperrten Telegramms über den dritten Ein-/Ausgangs-Port P2 und die neunte Datenleitung 245 die Freigabe der Verarbeitung des Telegramms anzuzeigen. Gleichermaßen kann der zweite Netzwerkverteiler 130 auch dazu ausgelegt sein, die Freigabe der Verarbeitung des Telegramms durch Hinzufügen des Telegrammelements in das Telegramm, anzuzeigen.

Der achte Netzwerkteilnehmer 170 liest die an ihn adressierten Ausgangsdaten des Telegramms, also die Nutzdaten, im Durchlauf und legt seine Eingangsdaten in das entsperrte Telegramm, bevor der achte Netzwerkteilnehmer 170 das entsperrte Telegramm über die neunte Datenleitung 245 an den dritten Netzwerkverteiler 140 weiterleitet. Der dritte Netzwerkverteiler 140 kann durch die Eigenschaft, dass der dritte Netzwerkverteiler 140 ebenso wie der erste und zweite Netzwerkverteiler 120, 130, als Netzwerkteilnehmer ausgebildet sein können, wenn jeweils der zweite Ein-/Ausgangs-Port P1 als für die Ausgabe eines entsperrten Telegramms mit der Telegrammkennung, der Segmentadresse des jeweiligen Segments, in dem der dritte Netzwerkverteiler 140 angeordnet ist, dafür eingestellt ist, gleichermaßen durch das entsperrte Telegramm adressiert sein. Beispielsweise ist der zweite Ein-/Ausgangs-Port P1 des dritten Netzwerkverteilers 140 für die Ausgabe des Telegramms mit der Telegrammkennung, der Segmentadresse b fest zugeordnet und der dritte Netzwerkverteiler 140 kann demnach als Netzwerkteilnehmer arbeiten. In dem Fall liest der dritte Netzwerkverteiler 140 die an ihn adressierten Ausgangsdaten im Telegramm im Durchlauf und legt seine Eingangsdaten in das entsperrte Telegramm, bevor der dritte Netzwerkverteiler 140 das entsperrte Telegramm über den der Telegrammkennung des zweiten Segments 305 zugeordneten zweiten Ein-/Ausgangs-Port P1 des dritten Netzwerkverteilers 140 über die zehnte Datenleitung 250 ausgibt.

Der neunte Netzwerkteilnehmer 175 empfängt das entsperrte Telegramm über die zehnte Datenleitung 250, liest die an ihn adressierten Ausgangsdaten des Telegramms, legt seine Eingangsdaten in das entsperrte Telegramm und versendet das entsperrte Telegramm über die zehnte Datenleitung 250 an den zehnten Netzwerkteilnehmer 180. Auch der zehnte Netzwerkteilnehmer 180 liest die an ihn adressierten Ausgangsdaten des entsperrten Telegramms im Durchlauf und legt seine Eingangsdaten in das entsperrte Telegramm. Zudem erkennt der zehnte Netzwerkteilnehmer 180, dass er der letzte Netzwerkteilnehmer in der Kette der Netzwerkteilnehmer im zweiten Segment 305 ist. Dies kann der zehnte Netzwerkteilnehmer 180 beispielsweise ebenfalls über einen mit einem Schalter kurzgeschlossenen weiteren Ein-/Ausgangs-Port des zehnten Netzwerkteilnehmers 180 erkennen, wie oben erläutert wurde.

Der zehnte Netzwerkteilnehmer 180 versendet das entsperrte Telegramm über die zehnte Datenleitung 250 an den neunten Netzwerkteilnehmer 175 zurück, und der neunte Netzwerkteilnehmer 175 sendet das entsperrte Telegramm über die zehnte Datenleitung 250 an den zweiten Ein-/Ausgangs-Port P1 des dritten Netzwerkverteilers 140. Der dritte Netzwerkverteiler 140 gibt das entsperrte Telegramm über den ersten Ein-/Ausgangs-Port P0 über die neunte Datenleitung 245 an den achten Netzwerkteilnehmer 170 aus, und der achte Netzwerkteilnehmer 170 versendet das entsperrte Telegramm über die neunte Datenleitung 245 an den zweiten Netzwerkverteiler 130. Der zweite Netzwerkverteiler 130 empfängt das entsperrte Telegramm über den dritten Ein-/Ausgangs-Port P2. Beispielsweise kann der zweite Netzwerkverteiler 130 derart eingestellt sein, dass wenn der zweite Netzwerkverteiler 130 ein entsperrtes Telegramm von einem vorausgehenden Netzwerkverteiler empfängt, beispielsweise dem dritten Netzwerkverteiler 140, das anhand der Telegrammkennung, der Segmentadresse b, nicht für das dem zweiten Netzwerkverteiler 130 zugeordnete erste Segment 300 bestimmt ist, der zweite Netzwerkverteiler 130 das entsperrte Telegramm sperrt, in dem der zweite Netzwerkverteiler 130 den ersten Wert des Datenelements oder des EtherCAT Protokolltyps auf den zweiten Wert setzt oder das Telegrammelement des Telegramms aus dem Kopfabschnitt des Telegramms entfernt und dadurch eine mögliche Verarbeitung des entsperrten Telegramms auf dem Rückweg zu dem Masterteilnehmer 105 verhindert.

Der dritte Netzwerkverteiler 130 gibt das gesperrte Telegramm über den ersten Ein-/Ausgangs-Port P0 über die zweite Datenleitung 210 an den fünften Netzwerkteilnehmer 155 aus. Der fünfte Netzwerkteilnehmer 155 kann das gesperrte Telegramm nicht verarbeiten und versendet das gesperrte Telegramm über die zweite Datenleitung 210 an den ersten Netzwerkverteiler 120. Der erste Netzwerkverteiler 120 empfängt das gesperrte Telegramm auf dem zweiten Ein-/Ausgangs-Port P1 und kann beispielsweise ausgelegt sein, das gesperrte Telegramm mit der Telegrammkennung in Form der Segmentadresse b zu entsperren, das heißt den zweiten Wert des Datenelements oder des EtherCAT Protokolltyps auf den ersten Wert des Datenelements oder des EtherCAT Protokolltyps zu setzen, bevor der erste Netzwerkverteiler 120 das Telegramm über den ersten Ein-/Ausgangs-Port P0 über die erste Datenleitung 205 an den Masterteilnehmer 105 ausgibt.

Die Beispiele zur Erläuterung des Telegrammverkehrs von dem Masterteilnehmer 105 zu den Netzwerkteilnehmern des ersten und zweiten Segments 300, 305 bzw. von den Netzwerkteilnehmern in den beiden Segmenten zurück zum Masterteilnehmer 105 sind exemplarisch gewählt worden und schränken den Telegrammverkehr nicht auf diese exemplarischen Beispiele ein. Die Erläuterung hätte gleichermaßen für den Telegrammverkehr vom Masterteilnehmer 105 zu einem anderen Segment des Automatisierungsnetzwerks 100 erfolgen können.

Ein EtherCAT Netzwerk umfasst in der Regel ein Datenleitungsnetz 200 mit Datenleitungen, die jeweils eine Hinleitung, die beispielsweise als TX-Leitung zum Versenden der Telegramme von dem Masterteilnehmer 105 an die Netzwerkteilnehmer ausgebildet ist, und eine Rückleitung aufweisen, die beispielsweise als RX-Leitung zum Empfang der Telegramme von dem Masterteilnehmer 105 ausgebildet ist (TX: Transmitter, RX: Receiver). Dies ist aus Übersichtlichkeitsgründen in Figur 1 nicht gezeigt. Ein Netzwerkteilnehmer in einem EtherCAT Netzwerk ist dazu ausgelegt, ein entsperrtes Telegramm auf der Hinleitung zu verarbeiten, also die an den Netzwerkteilnehmer adressierten Ausgangsdaten des entsperrten Telegramms zu lesen und die Eingangsdaten des Netzwerkteilnehmers in das entsperrte Telegramm zu legen. Das Zurücksenden der Telegramme erfolgt in dem EtherCAT Netzwerk über die Rückleitung, wobei die Netzwerkteilnehmer das entsperrte Telegramm über die Rückleitung nicht verarbeiten.

Beispielsweise kann der zweite Netzwerkverteiler 130 eingestellt sein, dass wenn der zweite Netzwerkverteiler 130 ein entsperrtes Telegramm mit der Telegrammkennung c über eine Hinleitung von einem vorausgehenden Netzwerkverteiler, zum Beispiel dem ersten Netzwerkverteiler 120, empfängt, der zweite Netzwerkverteiler 130 das entsperrte Telegramm mit der Telegrammkennung c über die Rückleitung an den Masterteilnehmer 105 zurücksendet. Dabei können die erste Datenleitung 205 und die zweite Datenleitung 210 jeweils eine Hinleitung und eine Rückleitung aufweisen und das entsperrte Telegramm beispielsweise von dem ersten Netzwerkverteiler 120 auf der Hinleitung verarbeiten worden sein. Eine Verarbeitung des entsperrten Telegramms auf der Rückleitung ist dann nicht mehr vorgesehen.

Die Voreinstellung des zweiten Netzwerkverteilers 130 kann mithilfe eines Konfigurationstelegramms erfolgt sein, das der Masterteilnehmer 105 an den zweiten Netzwerkverteiler 130 vor dem Versenden der Telegramme gesendet hat. Beispielsweise kann mit dem Konfigurationstelegramm in der Speichereinheit des zweiten Netzwerkverteilers 130 eingestellt werden, dass wenn der zweite Netzwerkverteiler 130 ein entsperrtes Telegramm mit einer bestimmten Telegrammkennung, zum Beispiel in Form des Symbols c, über die Hinleitung empfängt und das entsperrte Telegramm den ersten Wert des Datenelements oder des EtherCAT Protokolltyps aufweist, der zweite Netzwerkverteiler 130 das entsperrte Telegramm über die Rückleitung an den Masterteilnehmer 105 zurücksendet. Auch kann mit dem Konfigurationstelegramm im Falle einer zur Verfügung stehenden Datenleitung für das Versenden und das Empfangen der Telegramme im zweiten Netzwerkverteiler 130 eingestellt werden, dass wenn der zweite Netzwerkverteiler 130 ein entsperrtes Telegramm mit einer bestimmten Telegrammkennung, zum Beispiel in Form der Segmentadresse b, die nicht dem Segment das dem zweiten Netzwerkverteiler 130 zugeordnet ist, entspricht, also beispielsweise nicht dem ersten Segment 300 mit der Telegrammkennung a, sondern dem zweiten Segment 305 zugeordnet ist, und das entsperrte Telegramm den ersten Wert des Datenelements oder des EtherCAT Protokolltyps aufweist, der zweite Netzwerkverteiler 130 den ersten Wert des Datenelements oder des EtherCAT Protokolltyps auf den zweiten Wert des Datenelements oder des EtherCAT Protokolltyps setzt, um das Telegramm für die Verarbeitung durch die Netzwerkteilnehmer zu sperren. Dies ist insbesondere denkbar, wenn eine Verarbeitung des Telegramms von den Netzwerkteilnehmern auf dem Rückweg des Telegramms zu dem Masterteilnehmer 105 nicht ausgeschlossen ist. Auf diese Weise kann also die Vertraulichkeit der Datenübertragung in dem Automatisierungsnetzwerk 100 erhöht werden.

Für die obige Erläuterung ist exemplarisch der zweite Netzwerkverteiler 130 gewählt worden. Dieser ist jedoch nicht auf die beschriebenen Merkmale eingeschränkt, sondern jeder Netzwerkverteiler des Automatisierungsnetzwerk 100 eignet sich gleichermaßen dafür.

Die einzelnen Ein-/Ausgangs-Ports der Netzwerkverteiler, auf denen die Netzwerkverteiler jeweils ein Telegramm von dem Masterteilnehmer 105 empfangen haben, können vom jeweiligen Netzwerkverteiler in der Speichereinheit bzw. in der Routingtabelle des Netzwerkverteilers hinterlegt werden, um beim Zurücksenden der Telegramme von dem jeweiligen Netzwerkverteiler den dem Masterteilnehmer 105 zugeordneten ersten Ein-/Ausgangs-Port P0 des entsprechenden Netzwerkverteilers als den Ausgangs-Port zu nutzen.

Figur 2 zeigt einen schematischen Aufbau des ersten Netzwerkverteilers 120 des in Figur 1 gezeigten Automatisierungsnetzwerks 100. Für die Erläuterung des Aufbaus eines Netzwerkverteilers in dem Automatisierungsnetzwerk 100 in Figur 1 ist exemplarisch der erste Netzwerkverteiler 120 gewählt worden. Doch auch der zweite und dritte Netzwerkverteiler 130, 140 können gleichermaßen wie der erste Netzwerkverteiler 120 ausgebildet sein und sich zum Beispiel nur in der Anzahl der vorhandenen Ein-/Ausgangs-Ports in Figur 1 unterscheiden. Daher ist die nachfolgende Beschreibung des ersten Netzwerkverteilers 120 nicht als einschränkend auf die Ausgestaltung der Netzwerkverteiler in dem in Figur 1 gezeigten Automatisierungsnetzwerk 100 zu verstehen.

Der erste Netzwerkverteiler 120 umfasst den ersten Ein-/Ausgangs-Port P0, über den der erste Netzwerkverteiler 120 ein Telegramm von dem Masterteilnehmer 105 empfangen kann. Der erste Ein-/Ausgangs-Port P0 des ersten Netzwerkverteilers 120 steht mittels einer ersten Interaktionslinie 600 mit einer Verarbeitungseinheit 500 in Verbindung. Dabei repräsentiert die erste Interaktionslinie 600 sowie die nachfolgend beschriebenen Interaktionslinien mögliche interne physikalische und/oder logische Schaltungen oder Verbindungen der einzelnen Komponenten innerhalb des ersten Netzwerkverteilers 120. Die Interaktionslinien in Figur 2 können also einen vereinfachten internen Zugriff der Komponenten veranschaulichen, schränken die Umsetzung der physikalischen und/oder logischen Schaltung oder Verbindung jedoch nicht auf die gezeigte Darstellung ein.

Die Verarbeitungseinheit 500 des ersten Netzwerkverteilers 120 kann also über den ersten Ein-/Ausgangs-Port P0 des ersten Netzwerkverteilers 120 adressiert, das heißt eingestellt oder generell mit Telegrammen von dem Masterteilnehmer 105 angesprochen werden und dafür vorgesehen sein, Telegramme zu verarbeiten und/oder zu routen. Die Verarbeitungseinheit 500 kann wie in Figur 2 dargestellt ist, einen Protokollchip 505 sowie eine Routingeinheit 510 aufweisen, die zum Beispiel über eine zweite Interaktionslinie 605 miteinander in Verbindung stehen. Die Verarbeitungseinheit 500 kann also wie in Figur 2 gezeigt in Form einer Hardware ausgebildet sein. Alternativ ist auch eine Ausbildung der Verarbeitungseinheit 500 mittels einer Software denkbar, sowie eine kombinierte Hardware und Software Umsetzung der Verarbeitungseinheit 500.

Mithilfe des Protokollchips 505, der in einem EtherCAT Netzwerk vorzugsweise als EtherCAT Slave Controller ausgebildet ist, kann eine Verarbeitung eines entsperrten Telegramms von dem Masterteilnehmer 105, das die Freigabe der Verarbeitung über das Telegrammelement und im EtherCAT Netzwerk insbesondere über den ersten Wert des EtherCAT Protokolltyps anzeigt, durch den ersten Netzwerkverteiler 120 erfolgen. Der erste Netzwerkverteiler 120 wird durch die Verwendung des Protokollchips 505, der zur Verarbeitung eines bestimmten Datenübertragungsprotokolls ausgelegt ist, demnach zu einem vollwertigen als Slaveteilnehmer ausgelegten Netzwerkteilnehmer 800. In einem EtherCAT Netzwerk kann der erste Netzwerkverteiler 120 folglich durch die Verwendung eines EtherCAT Slave Controllers als Protokollchip 505 als ein gewöhnlicher EtherCAT Slaveteilnehmer fungieren und ein von dem Masterteilnehmer 105 über den ersten Ein-/Ausgangs-Port P0 des ersten Netzwerkverteilers 120 empfangenes entsperrtes Telegramm im Durchlauf verarbeiten. Der Protokollchip 505 des ersten Netzwerkverteilers 120 wird demnach über den ersten Ein-/Ausgangs-Port P0 des ersten Netzwerkverteilers 120 angesprochen.

Die Verarbeitungseinheit 500 des ersten Netzwerkverteilers 120 kann zudem eine Speichereinheit mit einer Routingtabelle umfassen, die in Figur 2 nicht dargestellt sind. Bei einem als EtherCAT Slave Controller ausgebildeten Protokollchip 505 kann die nicht dargestellte Speichereinheit mit der Routingtabelle beispielsweise im EtherCAT Slave Controller enthalten sein. Der erste Netzwerkverteiler 120 weist jedoch nicht nur die Funktionalität eines als Slaveteilnehmers ausgebildeten Netzwerkteilnehmers zur Verarbeitung entsperrter Telegramme auf, sondern kann gesperrte Telegramme mit der Funktionalität eines Netzwerkverteilers über den der entsprechenden Telegrammkennung zugeordneten Ein-/Ausgangs-Port des ersten Netzwerkverteilers 120 auch routen. Für das Routing der gesperrten Telegramme kann der erste Netzwerkverteiler 120 die Routingeinheit 510 der Verarbeitungseinheit 500 verwenden. In Figur 2 sind der Protokollchip 505 und die Routingeinheit 510 der Verarbeitungseinheit 500 als separate Einheiten gezeichnet, um die einzelnen Funktionalitäten trennen zu können. Dies ist jedoch nicht zwingend für die Umsetzung des erfindungsgemäßen ersten Netzwerkverteilers 120 erforderlich und kann auch davon abweichend verwirklicht werden, zum Beispiel in Form einer gemeinsamen Einheit.

Die Idee der Erfindung liegt also darin, ein Gerät mit einer Doppelfunktionalität bereitzustellen, das heißt einen konfigurierbaren Netzwerkverteiler, einen "Switch" oder "Branch" mit einem herkömmlichen Netzwerk- bzw. Slaveteilnehmer, der in der Lage ist, Telegramme von einem Masterteilnehmer zu verarbeiten, zu kombinieren und dem kombinierten Gerät mit Doppelfunktionalität mittels geeigneter Anzeige in den von dem Masterteilnehmer versendeten Telegrammen die Freigabe der Verarbeitung oder die Sperrung der Verarbeitung des Telegramms anzuzeigen.

Für das Routing eines gesperrten Telegramms, das mittels dem Protokollchip 505 des ersten Netzwerkverteilers 120 vorher nicht verarbeitet worden ist, über einen Ein-/Ausgangs-Port des ersten Netzwerkverteilers 120 kann die Routingeinheit 510 mithilfe der zweiten Interaktionslinie 605 auf die Speichereinheit des im EtherCAT Netzwerk als EtherCAT Slave Controller ausgebildeten Protokollchips 505 zugreifen, um die Routingtabelle der Speichereinheit auslesen zu können. In der Routingtabelle der Speichereinheit kann die Zuordnung der einzelnen Ein-/Ausgangs-Ports des ersten Netzwerkverteilers 120 zu einer Telegrammkennung eines Telegramms von dem Masterteilnehmer 105 hinterlegt sein. Auch kann in der Routingtabelle beispielsweise von dem Masterteilnehmer 105 hinterlegt worden sein, dass ein gesperrtes Telegramm mit dem zweiten Wert des Datenelements oder des EtherCAT Protokolltyps bzw. keinem angezeigten Telegrammelement und einer bestimmten Telegrammkennung von dem ersten Netzwerkverteiler 120 vor der Ausgabe über den der bestimmten Telegrammkennung zugeordneten Ein-/Ausgangs-Port des ersten Netzwerkverteilers 120, von dem ersten Netzwerkverteiler 120 entsperrt wird, um den an den entsprechenden Ein-/Ausgangs-Port angeschlossenen Netzwerkteilnehmern eine Freigabe der Verarbeitung des Telegramms anzuzeigen. Dazu kann in der Routingtabelle eingestellt sein, dass die Routingeinheit 510 des ersten Netzwerkverteilers 120 den zweiten Wert des Datenelements oder EtherCAT Protokolltyps auf den ersten Wert des Datenelements oder EtherCAT Protkolltyps setzt.

Ferner kann die Routingtabelle einen Eintrag mit den am ersten Netzwerkverteiler 120 vorhandenen Ein-/Ausgangs-Ports aufweisen, an denen über Datenleitungen Netzwerkteilnehmer angeschlossen sind, sowie ein Status über die Interaktionslinien zwischen den Komponenten im ersten Netzwerkverteiler 120, also beispielsweise ob die Verbindungen mittels Schalterfunktion kurzgeschlossen, also deaktiviert bzw. nicht freigeschaltet sind oder ob sie aktiv gesetzt sind. Auch die Datenübertragungsrate, für die die angeschlossenen Netzwerkteilnehmer ausgelegt sind, können als weiterer Eintrag in der Routingtabelle eingetragen sein. Ebenso kann die Routingtabelle, wie oben erläutert, einen Eintrag für die Routingeinheit 510 umfassen, also über welchen Ein-/Ausgangs-Port ein Telegramm mit einer bestimmten Telegrammkennung geroutet werden soll und ob gegebenenfalls eine Freigabe des Telegramms für die Verarbeitung erfolgen soll. In diesem Zusammenhang ist denkbar, dass die Routingtabelle einen Eintrag umfasst, mit dem der Ein-/Ausgangs-Port des ersten Netzwerkverteilers 120 hinterlegt wird, über den der erste Netzwerkverteiler 120 ein Telegramm von dem Masterteilnehmer empfangen hat, um das Telegramm auf dem Rückweg zu dem Masterteilnehmer über selbigen Ein-/Ausgangs-Port wieder ausgeben zu können. In der dargestellten Ausführungsform in Figur 2 ist dies zum Beispiel der erste Ein-/Ausgangs-Port P0 des ersten Netzwerkverteilers 120. Die Routingtabelle muss nicht zwingend in Form einer Tabelle verwirklicht werden, sondern kann ebenso einen Registersatz der Speichereinheit bilden.

Beispielsweise kann ein für die Verarbeitung gesperrtes Telegramm mit einer Telegrammkennung in Form der Segmentadresse d, mit der das dritte Segment 310 mit dem zweiten, dritten und vierten Netzwerkteilnehmer 125, 135, 145 angesprochen werden kann, von der Routingeinheit 510 des ersten Netzwerkverteilers 120 aufgrund der Zuordnung der Telegrammkennung, der Segmentadresse d, zu dem fünften Ein-/Ausgangs-Port P4 des ersten Netzwerkverteilers 120 über die zweite Interaktionslinie 605 aus der Routingtabelle der Speichereinheit des als EtherCAT Slave Controllers ausgebildeten Protokollchips 505 ausgelesen werden. Überdies kann die Routingeinheit 510 das Telegramm mit der Telegrammkennung der Segmentadresse d für die Netzwerkteilnehmer des dritten Segments 310 für die Verarbeitung freigeben, indem die Routingeinheit 510 des ersten Netzwerkverteilers 120 den zweiten Wert des Datenelements bzw. des EtherCAT Protokolltyps auf den ersten Wert des Datenelements bzw. des EtherCAT Protokolltyps setzt und das entsperrte Telegramm über eine sechste Interaktionslinie 625 über den fünften Ein-/Ausgangs-Port P4 des ersten Netzwerkverteilers 120 an den zweiten, dritten und vierten Netzwerkteilnehmer 125, 135, 145 zur Verarbeitung ausgibt.

Ferner kann einem für die Verarbeitung gesperrten Telegramm mit der Telegrammkennung in Form der Segmentadresse e, mit dem der erste Netzwerkteilnehmer 115 in dem vierten Segment 315 adressierbar ist, in der Routingtabelle des als EtherCAT Slave Controllers ausgebildeten Protokollchips 505 der vierte Ein-/Ausgangs-Port P3 des ersten Netzwerkverteilers 120 zugeordnet sein. Die Routingeinheit 510 kann analog zur obigen Beschreibung dazu ausgelegt sein, den zweiten Wert des Datenelements oder des EtherCAT Protokolltyps auf den ersten Wert zu setzen, um das Telegramm mit der Telegrammkennung, der Segmentadresse e, für den ersten Netzwerkteilnehmer 115 zur Verarbeitung freizugeben. Die Routingeinheit 510 greift für das Routing des Telegramms mit der Telegrammkennung in Form der Segmentadresse e auf die Routingtabelle des Protokollchips 505 zu, gibt das Telegramm frei zur Verarbeitung und versendet das Telegramm über eine fünfte Interaktionslinie 520 über den vierten Ein-/Ausgangs-Port P3 an den ersten Netzwerkteilnehmer 115.

Auf die gleiche Weise, wie oben erläutert wurde, kann die Routingeinheit 510 Telegramme über eine vierte Interaktionslinie 615 über den dritten Ein-/Ausgangs-Port P2 an den weiteren Masterteilnehmer 110 ausgeben, Telegramme über eine achte Interaktionslinie 635 über den siebten Ein-/Ausgangs-Port P6 an den dreizehnten Netzwerkteilnehmer 405 ausgeben und Telegramme über eine neunte Interaktionslinie 640 über den achten Ein-/Ausgangs-Port P7 an den zwölften Netzwerkteilnehmer 400 ausgeben. Die Routingeinheit 510 kann vor der Ausgabe der einzelnen Telegramme, die Telegramme für die Netzwerkteilnehmer jeweils zur Verarbeitung freigeben, wie oben ausgeführt ist. In dem in Figur 1 gezeigten Automatisierungsnetzwerk 100 weist der erste Netzwerkverteiler 120 an dem sechsten Ein-/Ausgangs-Port P5 beispielsweise keine Datenleitung mit Netzwerkteilnehmern auf. Demnach kann eine siebte Interaktionslinie 630 in Figur 2, die eine Verbindung der Routingeinheit 510 und des sechsten Ein-/Ausgangs-Ports P5 des ersten Netzwerkverteilers 120 bildet, deaktiviert werden. Dies kann zum Beispiel automatisch vom ersten Netzwerkverteiler 120 oder vom Masterteilnehmer 105 erfolgen.

Der zweite Ein-/Ausgangs-Port P1 des ersten Netzwerkverteilers 120 kann als festgelegter Ein-/Ausgangs-Port ausgebildet sein, über den der erste Netzwerkverteiler 120 ein entsperrtes Telegramm, das vorher von dem Protokollchip 505 verarbeitet worden ist, standardmäßig ausgibt. Beispielsweise kann die Festlegung von dem Masterteilnehmer 105 in der Speichereinheit des Protokollchips 505 hinterlegt sein, sodass die Routingeinheit 510 in dem Fall nicht über die zweite Interaktionslinie 605 auf die Routingtabelle zugreifen muss. Ist der Protokollchip 505 als EtherCAT Slave Controller ausgebildet, so ist der EtherCAT Slave Controller zwischen zwei ausgezeichneten Ein-/Ausgangs-Ports des ersten Netzwerkverteilers 120 angeordnet, wobei der erste Ein-/Ausgangs-Port P0 zum Beispiel den ersten ausgezeichneten Ein-/Ausgangs-Port bildet und der zweite Ein-/Ausgangs-Port P1, der als festgelegter Ein-/Ausgangs-Port ausgebildet ist, den zweiten ausgezeichneten Ein-/Ausgangs-Port des ersten Netzwerkverteilers 120 bildet. Für eine automatische Konfiguration des Automatisierungsnetzwerks 100, das vorzugsweise als EtherCAT Netzwerk ausgebildet ist, ist es erforderlich, dass an dem ersten und dem zweiten ausgezeichneten Ein-/Ausgangs-Port des ersten Netzwerkverteilers 120 lediglich EtherCAT Netzwerkteilnehmer angeschlossen sind, die für die zweite Datenübertragungsrate mit wenigstens 1 Gbit/s ausgelegt sind.

Der erste Netzwerkverteiler 120 kann jedoch über den zweiten Ein-/Ausgangs-Port P1 gleichermaßen Telegramme routen. Insbesondere kann die Routingeinheit 510 des ersten Netzwerkverteilers 120 ein gesperrtes Telegramm mit der Telegrammkennung, der Segmentadresse c, mit der die Netzwerkteilnehmer des zweiten Segments 305 angesprochen werden können, über den zweiten Ein-/Ausgangs-Port P1 routen. Denn in der Routingtabelle des Protokollchips 505 ist beispielsweise hinterlegt, dass die Telegrammkennung in Form der Segmentadresse c dem zweiten Ein-/Ausgangs-Port P1 für die Ausgabe des Telegramms zugeordnet ist. Da die Netzwerkteilnehmer des zweiten Segments 305 unmittelbar über die neunte Datenleitung 245 an den dritten Netzwerkverteiler 130 angeschlossen sind, kann die Routingtabelle des ersten Netzwerkverteilers 120 beispielsweise keinen Eintrag umfassen, dass die Routingeinheit 610 des ersten Netzwerkverteilers 120 den zweiten Wert des Datenelements oder des EtherCAT Protokolltyps auf den ersten Wert setzt, um das Telegramm für die Verarbeitung freizugeben. Denn das Telegramm durchläuft nach der Ausgabe durch die Routingeinheit 510 über den zweiten Ein-/Ausgangs-Port P1 zunächst den fünften Netzwerkteilnehmer 155, bevor der dritte Netzwerkverteiler 130 das Telegramm über seinen ersten Ein-/Ausgangs-Port P0 empfängt. Eine Sperrung des Telegramms für die Verarbeitung ist daher sinnvoll, soll nicht der fünfte Netzwerkteilnehmer 155 das Telegramm auf dem Weg zu dem zweiten Segment 305 verarbeiten.

Überdies ist der erste Netzwerkverteiler 120 wie auch der zweite und der dritte Netzwerkverteiler 130, 140 ausgelegt, Telegramme von den Netzwerkteilnehmern auf dem Rückweg zu dem Masterteilnehmer 105 zu fragmentieren und die Telegramme in Fragmenten über das Datenleitungsnetz 200 an den Masterteilnehmer 105 zu übertragen.

Im Zuge der Erfassung des Automatisierungsnetzwerks 100 mit seinen Netzwerkteilnehmern kann der erste Netzwerkverteiler 120 ein vom Masterteilnehmer 105 über den ersten Ein-/Ausgangs-Port P0 empfangenes Abfragetelegramm beispielsweise nach dem Auslesen des Protokollchips 505, also genauer des Registersatzes der Speichereinheit, welche die Routingtabelle des ersten Netzwerkverteilers 120 umfassen kann, über die erste Datenleitung 205 an den Masterteilnehmer 105 zurücksenden. Dies geschieht aus dem Grund, da die zweite Interaktionslinie 605 zwischen dem Protokollchip 505 und der Routingeinheit 610 zunächst deaktiviert ist, also noch keine Verbindung zwischen dem Protokollchip 505 und der Routingeinheit 610 freigeschaltet ist. Der Registersatz ist jedoch unabhängig davon auslesbar, um eine Information über die vorhandenen Ein-/Ausgangs-Ports des ersten Netzwerkverteilers 120 sowie deren möglich einstellbare Datenübertragungsrate zu erhalten und den ersten Netzwerkverteiler 120 aufgrund der genannten Information als solchen von dem Masterteilnehmer 105 erkennen zu können. Die Verbindung, also die zweite Interaktionslinie 605, sowie weitere Interaktionslinien können dann freigeschalten werden. Dies kann beispielsweise durch Überschreiben eines dafür im Registersatz in der Speichereinheit des Protokollchips 505 vorgesehenen Eintrags für den Status der Verbindung von dem Masterteilnehmer 105 erfolgen.

Der erfindungsgemäße erste Netzwerkverteiler 120 sowie der zweite und der dritte Netzwerkverteiler 130, 140 sind nicht auf die in Figur 1 dargestellte Netzwerktopologie beschränkt, sondern können auch in Netzwerken mit abweichenden Netzwerktopologien eingesetzt werden. Ferner sind sie nicht auf ein EtherCAT Netzwerk beschränkt, sondern können ebenso in anderen Netzwerken eingesetzt werden, in denen Netzwerkverteiler zum Routing der Telegramme erforderlich sind und die Netzwerkverteiler auch zum Verarbeiten der Telegramme eingesetzt werden sollen.

Die Erfindung wurde im Detail durch bevorzugte Ausführungsbeispiele beschrieben. Anstelle der beschriebenen Ausführungsbeispiele sind weitere Ausführungsbeispiele denkbar, welche weitere Abwandlungen oder Kombinationen von beschriebenen Merkmalen aufweisen können. Die Erfindung ist aus diesem Grund nicht durch die offenbarten Beispiele eingeschränkt, da vom Fachmann andere Variationen daraus abgeleitet werden können, ohne dabei den Schutzumfang der Erfindung zu verlassen.

## Patentansprüche

1. Automatisierungsnetzwerk (100) mit Netzwerkteilnehmern (800), die über ein Datenleitungsnetz (200) miteinander verbunden sind,
wobei wenigstens ein Netzwerkteilnehmer (800) als Masterteilnehmer (105, 110) ausgebildet ist, der ausgelegt ist, Telegramme über das Datenleitungsnetz (200) zu versenden, wobei wenigstens ein Netzwerkteilnehmer (800) als Netzwerkverteiler (120, 130, 140) ausgebildet ist, der ausgelegt ist, Telegramme zu routen,
wobei der Netzwerkverteiler (120, 130, 140) mehrere Ein-/Ausgangs-Ports (P0, P1, P2, P3, P4, P5, P6, P7) umfasst und über einen ersten Ein-/Ausgangs-Port (P0) mit dem Masterteilnehmer (105) über das Datenleitungsnetz (200) verbunden ist,
wobei der Masterteilnehmer (105, 110) ausgelegt ist, mit einem Telegrammelement in dem zu versendenden Telegramm anzuzeigen, dass das Telegramm für eine Verarbeitung durch die Netzwerkteilnehmer (800) freigegeben ist,
wobei der Netzwerkverteiler (120, 130, 140) ausgelegt ist, ein über den ersten Ein-/Ausgangs-Port (P0) empfangenes Telegramm zu verarbeiten, wenn das Telegrammelement des Telegramms eine Freigabe der Verarbeitung des Telegramms für die Netzwerkteilnehmer (800) anzeigt,
**dadurch gekennzeichnet, dass** der Netzwerkverteiler (120, 130, 140) ausgelegt ist, wenn der Netzwerkverteiler (120, 130, 140) über den ersten Ein-/Ausgangs-Port (P0) ein Telegramm von dem Masterteilnehmer (105) empfängt, das mit einem Telegrammelement eine Freigabe der Verarbeitung des Telegramms für die Netzwerkteilnehmer (800) anzeigt, das Telegramm nach der Verarbeitung durch den Netzwerkverteiler (120, 130, 140) über einen fest zugeordneten weiteren Ein-/Ausgangs-Port (P1, P2, P3, P4, P5, P6, P7) des Netzwerkverteilers (120, 130, 140) auszugeben, wenn an dem fest zugeordneten weiteren Ein-/Ausgangs-Port (P1, P2, P3, P4, P5, P6, P7) des Netzwerkverteilers (120, 130, 140) weitere Netzwerkteilnehmer (800) angeschlossen sind.

2. Automatisierungsnetzwerk nach Anspruch 1,
wobei, wenn ein Telegramm eine Freigabe der Verarbeitung des Telegramms durch die Netzwerkteilnehmer (800) nicht anzeigt und der Netzwerkverteiler (120, 130, 140) beim Routen des Telegramms feststellt, dass das Telegramm für Netzwerkteilnehmer (800) bestimmt ist, die direkt über einen Ein-/Ausgangs-Port (P0, P1, P2, P3, P4, P6, P7) des Netzwerkverteilers (120, 130, 140) angeschlossen sind, der Netzwerkverteiler (120, 130, 140) ausgelegt ist, das Telegramm für die Verarbeitung durch die Netzwerkteilnehmer (800) freizugeben und die Freigabe der Verarbeitung mit dem Telegrammelement anzuzeigen.

3. Automatisierungsnetzwerk nach einem der Ansprüche 1 bis 2,
wobei die Telegramme eine Telegrammkennung aufweisen, und
wobei der Netzwerkverteiler (120, 130, 140) ausgebildet ist, auf der Grundlage der Telegrammkennung ein Routing der Telegramme über die Ein-/Ausgangs-Ports (P0, P1, P2, P3, P4, P6, P7) des Netzwerkverteilers (120, 130, 140) durchzuführen.

4. Automatisierungsnetzwerk nach einem der Ansprüche 1 bis 3,
wobei das Telegrammelement als ein Datenelement mit einem ersten oder zweiten Wert ausgebildet ist,
wobei der erste Wert anzeigt, dass ein Telegramm für die Verarbeitung durch die Netzwerkteilnehmer (800) freigegeben ist, und
wobei der zweite Wert anzeigt, dass ein Telegramm für die Verarbeitung durch die Netzwerkteilnehmer (800) gesperrt ist.

5. Automatisierungsnetzwerk nach einem der Ansprüche 1 bis 4,
wobei die Telegramme als EtherCAT Telegramme ausgebildet sind, und
wobei das Telegrammelement als EtherCAT Protokolltyp ausgebildet ist.

6. Netzwerkverteiler (120, 130, 140), der mehrere Ein-/Ausgangs-Ports (P0, P1, P2, P3, P4, P5, P6, P7) und eine Verarbeitungseinheit (500) zum Verarbeiten und/oder Routen eines Telegramms umfasst,
wobei der Netzwerkverteiler (120, 130, 140) ausgelegt ist, über einen ersten Ein-/Ausgangs-Port (P0) über ein Datenleitungsnetz (200) mit einem Masterteilnehmer (105) verbunden zu sein,
wobei die Verarbeitungseinheit (500) des Netzwerkverteilers (120, 130, 140) ausgebildet ist, ein über den ersten Ein-/Ausgangs-Port (P0) des Netzwerkverteilers (120, 130, 140) empfangenes Telegramm von dem Masterteilnehmer (105) zu verarbeiten, wenn der Masterteilnehmer (105) mit einem Telegrammelement in dem Telegramm anzeigt, dass das Telegramm für eine Verarbeitung durch die Verarbeitungseinheit (500) des Netzwerkverteilers (120, 130, 140) freigegeben ist,
**dadurch gekennzeichnet, dass** die Verarbeitungseinheit (500) des Netzwerkverteilers (120, 130, 140) mit dem ersten Ein-/Ausgangs-Port (P0) des Netzwerkverteilers (120, 130, 140) verbunden ist,
wobei die Verarbeitungseinheit (500) des Netzwerkverteilers (120, 130, 140) ausgelegt ist, wenn der Netzwerkverteiler (120, 130, 140) über den ersten Ein-/Ausgangs-Port (P0) ein Telegramm von dem Masterteilnehmer (105) empfängt, das mit einem Telegrammelement eine Freigabe der Verarbeitung des Telegramms für die Verarbeitungseinheit (500) des Netzwerkverteilers (120, 130, 140) anzeigt, das Telegramm nach der Verarbeitung durch den Netzwerkverteiler (120, 130, 140) über einen fest zugeordneten weiteren Ein-/Ausgangs-Port (P1, P2, P3, P4, P5, P6, P7) des Netzwerkverteilers (120, 130, 140) auszugeben, wenn an dem fest zugeordneten weiteren Ein-/Ausgangs-Port (P1, P2, P3, P4, P5, P6, P7) des Netzwerkverteilers (120, 130, 140) weitere Netzwerkteilnehmer (800) angeschlossen sind.

7. Netzwerkverteiler nach Anspruch 6,
wobei, wenn ein Telegramm eine Freigabe der Verarbeitung des Telegramms durch die Netzwerkteilnehmer (800) nicht anzeigt und der Netzwerkverteiler (120, 130, 140) mittels der Verarbeitungseinheit (500) beim Routen des Telegramms feststellt, dass das Telegramm für Netzwerkteilnehmer (800) bestimmt ist, die direkt über einen Ein-/Ausgangs-Port (P0, P1, P2, P3, P4, P6, P7) des Netzwerkverteilers (120, 130, 140) angeschlossen sind, die Verarbeitungseinheit (500) des Netzwerkverteilers (120, 130, 140) ausgelegt ist, das Telegramm für die Verarbeitung durch die Netzwerkteilnehmer (800) freizugeben und die Freigabe der Verarbeitung mit dem Telegrammelement anzuzeigen.

8. Netzwerkverteiler nach einem der Ansprüche 6 bis 7,
wobei die Telegramme eine Telegrammkennung aufweisen,
wobei die Verarbeitungseinheit (500) des Netzwerkverteilers (120, 130, 140) einen Protokollchip (505) zur Verarbeitung der Telegramme umfasst und eine Routingeinheit (510) aufweist, die auf der Grundlage der Telegrammkennung der Telegramme ein Routing der Telegramme über die Ein-/Ausgangs-Ports (P0, P1, P2, P3, P4, P6, P7) des Netzwerkverteilers (120, 130, 140) durchführen kann.

9. Netzwerkverteiler nach Anspruch 8,
wobei der Protokollchip (505) der Verarbeitungseinheit (500) des Netzwerkverteilers (120, 130, 140) als EtherCAT Slave Controller ausgebildet ist.

10. Netzwerkverteiler nach Anspruch 8 oder 9,
wobei die Routingeinheit (510) der Verarbeitungseinheit (500) des Netzwerkverteilers (120, 130, 140) ausgelegt ist, die Telegrammkennung der Telegramme jeweils mit einer Routingtabelle zu vergleichen und die Telegramme über den der Telegrammkennung zugeordneten Ein-/Ausgangs-Port (P0, P1, P2, P3, P4, P6, P7) des Netzwerkverteilers (120, 130, 140) auszugeben, und
wobei die Routingeinheit (510) der Verarbeitungseinheit (500) des Netzwerkverteilers (120, 130, 140) ausgebildet ist, ein Telegramm für eine Verarbeitung durch die Netzwerkteilnehmer (800) freizugeben und die Freigabe für die Netzwerkteilnehmer (800) in dem Telegramm mit dem Telegrammelement anzuzeigen.

11. Netzwerkverteiler nach einem der Ansprüche 6 bis 10,
wobei das Telegrammelement als ein Datenelement mit einem ersten oder zweiten Wert ausgebildet ist,
wobei der erste Wert anzeigt, dass ein Telegramm für die Verarbeitung durch die Netzwerkteilnehmer (800) freigegeben ist, und
wobei der zweite Wert anzeigt, dass ein Telegramm für die Verarbeitung durch die Netzwerkteilnehmer (800) gesperrt ist.

12. Netzwerkverteiler nach einem der Ansprüche 6 bis 11,
wobei die Telegramme als EtherCAT Telegramme ausgebildet sind und der Netzwerkverteiler (120, 130, 140) ausgelegt ist die EtherCAT Telegramme zu verarbeiten, und
wobei das Telegrammelement als EtherCAT Protokolltyp ausgebildet ist.

13. Verfahren zur Datenübertragung in einem Automatisierungsnetzwerk,
wobei das Automatisierungsnetzwerk (100) nach einem der Ansprüche 1 bis 5 ausgebildet ist und einen Netzwerkverteiler (120, 130, 140) nach einem der Ansprüche 6 bis 12 aufweist, der ausgelegt ist das Verfahren zur Datenübertragung auszuführen.

## Claims

1. Automation network (100) comprising network subscribers (800) which are connected to one another via a data line network (200),
wherein at least one network subscriber (800) is in the form of a master subscriber (105, 110) which is designed to send telegrams via the data line network (200), wherein at least one network subscriber (800) is in the form of a network distributer (120, 130, 140) which is designed to route telegrams,
wherein the network distributer (120, 130, 140) comprises multiple input/output ports (P0, P1, P2, P3, P4, P5, P6, P7) and is connected to the master subscriber (105) via the data line network (200) using a first input/output port (P0),
wherein the master subscriber (105, 110) is designed to indicate, with a telegram element in the telegram to be sent, that the telegram is enabled for processing by the network subscribers (800),
wherein the network distributer (120, 130, 140) is designed to process a telegram received via the first input/output port (P0) when the telegram element of the telegram indicates that the processing of the telegram has been enabled for the network subscribers (800), **characterized in that**
when the network distributor (120, 130, 140) receives a telegram from the master subscriber (105) via the first input/output port (P0) which indicates, with a telegram element, that the processing of the telegram has been enabled for the network subscribers (800), the network distributor (120, 130, 140) is designed to output the telegram via a fixedly assigned further input/output port (P1, P2, P3, P4, P5, P6, P7) of the network distributor (120, 130, 140) after it has been processed by the network distributor (120, 130, 140) when further network subscribers (800) are connected to the fixedly assigned further input/output port (P1, P2, P3, P4, P5, P6, P7) of the network distributor (120, 130, 140).

2. Automation network according to Claim 1,
wherein, when a telegram does not indicate that the processing of the telegram by the network subscribers (800) has been enabled and the network distributor (120, 130, 140) determines during routing of the telegram that the telegram is intended for network subscribers (800) which are connected directly via an input/output port (P0, P1, P2, P3, P4, P6, P7) of the network distributor (120, 130, 140), the network distributor (120, 130, 140) is designed to enable the telegram for processing by the network subscribers (800) and to indicate, with the telegram element, the enabling for processing.

3. Automation network according to any one of Claims 1 to 2,
wherein the telegrams comprise a telegram identifier, and wherein the network distributor (120, 130, 140) is formed to route the telegrams via the input/output port (P0, P1, P2, P3, P4, P6, P7) of the network distributor (120, 130, 140) on the basis of the telegram identifier.

4. Automation network according to any one of Claims 1 to 3,
wherein the telegram element is in the form of a data element with a first or second value,
wherein the first value indicates that a telegram is enabled for processing by the network subscribers (800), and
wherein the second value indicates that a telegram is blocked for processing by the network subscribers (800).

5. Automation network according to any one of Claims 1 to 4,
wherein the telegrams are in the form of EtherCAT telegrams, and
wherein the telegram element is in the form of an EtherCAT protocol type.

6. Network distributor (120, 130, 140) comprising multiple input/output ports (P0, P1, P2, P3, P4, P5, P6, P7) and a processing unit (500) for processing and/or routing a telegram,
wherein the network distributor (120, 130, 140) is designed to be connected to a master subscriber (105) via a data line network (200) using a first input/output port (P0),
wherein the processing unit (500) of the network distributor (120, 130, 140) is formed to process a telegram from the master subscriber (105) received via the first input/output port (P0) of the network distributor (120, 130, 140) when the master subscriber (105) indicates, with a telegram element in the telegram, that the telegram is enabled for processing by way of the processing unit (500) of the network distributor (120, 130, 140),
**characterized in that**
the processing unit (500) of the network distributor (120, 130, 140) is connected to the input/output port (P0) of the network distributor (120, 130, 140), wherein, when the network distributor (120, 130, 140) receives a telegram from the master subscriber (105) via the first input/output port (P0) which indicates, with a telegram element, that the telegram has been enabled for processing the processing unit (500) of the network distributor (120, 130, 140), the processing unit (500) of the network distributor (120, 130, 140) is designed to output the telegram via a fixedly assigned further input/output port (P1, P2, P3, P4, P5, P6, P7) of the network distributor (120, 130, 140) after it has been processed by the network distributor (120, 130, 140) when further network subscribers (800) are connected to the fixedly assigned further input/output port (P1, P2, P3, P4, P5, P6, P7) of the network distributor (120, 130, 140) .

7. Network distributor according to Claim 6,
wherein, when a telegram does not indicate that the processing of the telegram by the network subscribers (800) has been enabled and the network distributor (120, 130, 140) determines, by means of the processing unit (500), during routing of the telegram that the telegram is intended for network subscribers (800) which are connected directly via an input/output port (P0, P1, P2, P3, P4, P6, P7) of the network distributor (120, 130, 140), the processing unit (500) of the network distributor (120, 130, 140) is designed to enable the telegram for processing by the network subscribers (800) and to indicate, with the telegram element, the enabling for processing.

8. Network distributor according to any one of Claims 6 to 7,
wherein the telegrams comprise a telegram identifier, and wherein the processing unit (500) of the network distributor (120, 130, 140) comprises a protocol chip (505) for processing the telegrams and comprises a routing unit (510) which can route the telegrams via the input/output port (P0, P1, P2, P3, P4, P6, P7) of the network distributor (120, 130, 140) on the basis of the telegram identifier of the telegrams.

9. Network distributor according to Claim 8,
wherein the protocol chip (505) of the processing unit (500) of the network distributor (120, 130, 140) is in the form of an EtherCAT slave controller.

10. Network distributor according to Claim 8 or 9,
wherein the routing unit (510) of the processing unit (500) of the network distributor (120, 130, 140) is designed to compare each of the telegram identifiers of the telegrams with a routing table and to output the telegrams via the input/output port (P0, P1, P2, P3, P4, P6, P7) of the network distributor (120, 130, 140) assigned to the telegram identifier, and
wherein the routing unit (510) of the processing unit (500) of the network distributor (120, 130, 140) is designed to enable a telegram for processing by the network subscribers (800) and to indicate, with the telegram element, the enabling for the network subscribers (800) in the telegram.

11. Network distributor according to any one of Claims 6 to 10,
wherein the telegram element is in the form of a data element with a first or second value,
wherein the first value indicates that a telegram is enabled for processing by the network subscribers (800), and
wherein the second value indicates that a telegram is blocked for processing by the network subscribers (800).

12. Network distributor according to any one of Claims 6 to 11,
wherein the telegrams are in the form of EtherCAT telegrams and the network distributor (120, 130, 140) is designed to process the EtherCAT telegrams, and
wherein the telegram element is in the form of an EtherCAT protocol type.

13. Method for data transmission in an automation network,
wherein the automation network (100) is designed according to one of Claims 1 to 5 and comprises a network distributor (120, 130, 140) according to one of Claims 6 to 12, which is designed to execute the method for data transmission.

## Revendications

1. Réseau d'automatisation (100) comprenant des périphériques de réseau (800) qui sont reliés entre eux par le biais d'un réseau de lignes de données (200),
au moins un périphérique de réseau (800) étant réalisé sous la forme d'un périphérique maître (105, 110) qui est conçu pour envoyer des télégrammes sur le réseau de lignes de données (200),
au moins un périphérique de réseau (800) étant réalisé sous la forme d'un distributeur de réseau (120, 130, 140) qui est conçu pour acheminer des télégrammes,
le distributeur de réseau (120, 130, 140) comprenant une pluralité de ports d'entrée/sortie (P0, P1, P2, P3, P4, P5, P6, P7) et étant relié, par un premier port d'entrée/sortie (P0),au périphérique-maître (105) par le biais du réseau de lignes de données (200),
le périphérique-maître (105, 110) étant conçu pour indiquer au moyen d'élément de télégramme situé dans le télégramme à envoyer que le télégramme est autorisé à être traité par les périphériques de réseau (800),
le distributeur de réseau (120, 130, 140) étant conçu pour traiter un télégramme reçu par le biais du premier port d'entrée/sortie (P0) lorsque l'élément de télégramme du télégramme indique que le télégramme est autorisé à être traité par les périphériques de réseau (800), **caractérisé en ce que** le distributeur de réseau (120, 130, 140) est conçu, lorsque le distributeur de réseau (120, 130, 140) reçoit du périphérique-maître (105) par le biais du premier port d'entrée/sortie (P0) un télégramme qui indique au moyen d'un élément de télégramme que le télégramme est autorisé à être traité par les périphériques de réseau (800), pour délivrer le télégramme après traitement par le biais du distributeur de réseau (120, 130, 140) sur un autre port d'entrée/sortie (P1, P2, P3, P4 , P5, P6, P7), associé de manière fixe, du distributeur de réseau (120, 130, 140) lorsque d'autres périphériques de réseau (800) sont raccordés à l'autre port d'entrée/sortie (P1, P2, P3, P4, P5, P6, P7), associé de manière fixe, du distributeur de réseau (120, 130, 140).

2. Réseau d'automatisation selon la revendication 1, lorsqu'un télégramme n'indique pas que le télégramme est autorisé à être traité par les périphériques de réseau (800) et que le distributeur de réseau (120, 130, 140) détermine lors de l'acheminement du télégramme que le télégramme est destiné aux périphériques de réseau (800) qui sont raccordés directement par le biais d'un port d'entrée/sortie (P0, P1, P2, P3, P4, P6, P7) du distributeur de réseau (120, 130, 140), le distributeur de réseau (120, 130, 140) est conçu pour autoriser le télégramme à être traité par les périphériques de réseau (800) et pour indiquer l'autorisation du traitement au moyen de l'élément de télégramme.

3. Réseau d'automatisation selon l'une des revendications 1 à 2,
les télégrammes comportant un identificateur de télégramme, et
le distributeur de réseau (120, 130, 140) étant conçu pour acheminer les télégrammes par le biais des ports d'entrée/sortie (P0, P1, P2, P3, P4, P6, P7) du distributeur de réseau (120, 130, 140) sur la base de l'identificateur de télégramme.

4. Réseau d'automatisation selon l'une des revendications 1 à 3,
l'élément de télégramme étant réalisé sous la forme d'un élément de données présentant une première ou une deuxième valeur,
la première valeur indiquant qu'un télégramme est autorisé à être traité par les périphériques de réseau (800), et
la deuxième valeur indiquant qu'un télégramme est bloqué pour le traitement par les périphériques de réseau (800).

5. Réseau d'automatisation selon l'une des revendications 1 à 4,
les télégrammes sont réalisés sous la forme de télégrammes EtherCAT, et
l'élément de télégramme étant réalisé sous la forme d'un type de protocole EtherCAT.

6. Distributeur réseau (120, 130, 140) qui comprend une pluralité de ports d'entrée/sortie (P0, P1, P2, P3, P4, P5, P6, P7) et une unité de traitement (500) destinée à traiter et/ou acheminer un télégramme,
le distributeur de réseau (120, 130, 140) étant conçu pour être relié à un périphérique-maître (105) par le biais d'un premier port d'entrée/sortie (P0) et d'un réseau de lignes de données (200),
l'unité de traitement (500) du distributeur de réseau (120, 130, 140) étant conçue pour traiter un télégramme reçu du périphérique-maître (105) par le biais du premier port d'entrée/sortie (P0) du distributeur de réseau (120, 130, 140) lorsque le périphérique-maître (105) indique au moyen d'un élément de télégramme situé dans le télégramme que le télégramme est autorisé à être traité par l'unité de traitement (500) du distributeur de réseau (120, 130, 140),
**caractérisé en ce que** l'unité de traitement (500) du distributeur de réseau (120, 130, 140) est reliée au premier port d'entrée/sortie (P0) du distributeur de réseau (120, 130, 140),
l'unité de traitement (500) du distributeur de réseau (120, 130, 140) étant conçue, lorsque le distributeur de réseau (120, 130, 140) reçoit du périphérique-maître (105) par le biais du premier port d'entrée/sortie (P0) un télégramme qui indique au moyen d'un élément de télégramme que le télégramme est autorisé à être traité par l'unité de traitement (500) du distributeur de réseau (120, 130, 140), pour délivrer le télégramme après traitement par le biais du distributeur de réseau (120, 130, 140) sur un autre port d'entrée/sortie (P1, P2, P3, P4, P5, P6, P7), associé de manière fixe, du distributeur de réseau (120, 130, 140) lorsque d'autres périphériques de réseau (800) sont raccordés à l'autre port d'entrée/sortie (P1, P2, P3, P4, P5, P6, P7), associé de manière fixe, du distributeur de réseau (120, 130, 140).

7. Distributeur réseau selon la revendication 6, lorsqu'un télégramme n'indique pas que le télégramme est autorisé à être traité par les périphériques de réseau (800) et que le distributeur de réseau (120, 130, 140) détermine au moyen de l'unité de traitement (500) lors de l'acheminement du télégramme que le télégramme est destiné à des périphériques de réseau (800) qui sont raccordés directement par le biais d'un port d'entrée/sortie (P0, P1, P2, P3, P4, P6, P7) du distributeur de réseau (120, 130, 140), l'unité de traitement (500) du distributeur de réseau (120, 130, 140) est conçue pour autoriser le télégramme à être traité par les périphériques de réseau (800) et pour indiquer l'autorisation du traitement au moyen de l'élément de télégramme.

8. Distributeur de réseau selon l'une des revendications 6 à 7,
les télégrammes comportant un identificateur de télégramme,
l'unité de traitement (500) du distributeur de réseau (120, 130, 140) comprenant une puce de protocole (505) destinée au traitement des télégrammes et comportant une unité d'acheminement (510) qui achemine les télégrammes par le biais des ports d'entrée/sortie (P0, P1, P2, P3, P4, P6, P7) du distributeur de réseau (120, 130, 140) sur la base de l'identificateur de télégramme des télégrammes.

9. Distributeur de réseau selon la revendication 8,
la puce de protocole (505) de l'unité de traitement (500) du distributeur de réseau (120, 130, 140) étant réalisée sous la forme d'un contrôleur esclave EtherCAT.

10. Distributeur de réseau selon la revendication 8 ou 9,
l'unité d'acheminement (510) de l'unité de traitement (500) du distributeur de réseau (120, 130, 140) étant conçue pour comparer l'identificateur de télégramme des télégrammes à une table d'acheminement et pour délivrer les télégrammes par le biais du port d'entrée/sortie (P0, P1, P2, P3, P4, P6, P7) du distributeur de réseau (120, 130, 140), et
l'unité d'acheminement (510) de l'unité de traitement (500) du distributeur de réseau (120, 130, 140) étant conçue pour autoriser un télégramme à être traité par les périphériques de réseau (800) et pour indiquer l'autorisation aux périphériques de réseau (800) dans le télégramme comprenant l'élément de télégramme.

11. Distributeur de réseau selon l'une des revendications 6 à 10,
l'élément de télégramme étant réalisé sous la forme d'un élément de données présentant une première ou une deuxième valeur,
la première valeur indiquant qu'un télégramme est autorisé à être traité par les périphériques de réseau (800), et
la deuxième valeur indiquant qu'un télégramme est bloqué pour le traitement par les périphériques de réseau (800).

12. Distributeur de réseau selon l'une des revendications 6 à 11,
les télégrammes étant réalisés sous la forme de télégrammes EtherCAT et le distributeur de réseau (120, 130, 140) étant conçu pour traiter les télégrammes EtherCAT, et
l'élément de télégramme étant réalisé sous la forme d'un type de protocole EtherCAT.

13. Procédé de transmission de données dans un réseau d'automatisation,
le réseau d'automatisation (100) étant conçu selon l'une des revendications 1 à 5 et comportant un distributeur de réseau (120, 130, 140) selon l'une des revendications 6 à 12 qui est conçu pour mettre en œuvre le procédé de transmission de données.
